(19) Europäisches Patentamt
European Patent Office
Office européen des brevets

(11) EP 4 718 322 A1

(12) EUROPEAN PATENT APPLICATION

(43) Date of publication:
01.04.2026 Bulletin 2026/14

(21) Application number: 25198500.8

(22) Date of filing: 27.08.2025

(51) International Patent Classification (IPC):
G06N 3/045 (2023.01)        G06N 3/063 (2023.01)
G06N 3/096 (2023.01)        G06N 3/0464 (2023.01)

(52) Cooperative Patent Classification (CPC):
G06N 3/045; G06N 3/0464; G06N 3/063;
G06N 3/096

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 25.09.2024 US 202418896022

(71) Applicant: Viavi Solutions Inc.
Chandler, AZ 85286 (US)

(72) Inventors:
• GUPTA, Ankit
  Welwyn Garden City, AL7 3EQ (GB)
• DIZDAR, Onur
  London, W4 3DF (GB)
• WANG, Stephen
  Stevenage, SG1 2AN (GB)

(74) Representative: Murgitroyd & Company
165-169 Scotland Street
Glasgow G5 8PL (GB)

(54) **TRANSFER LEARNING FOR MODULATION GENERALIZATION IN NEURAL NET TRANSMITTERS/RECEIVERS**

(57)    Transfer learning (TL)-based systems, methods, and devices are provided for neural network and/or neuromorphic network transmitters/receivers with a set of desired modulation orders. In one aspect, a source system trains a full neural net modulation/demodulation model, from which one or more upper/output layers are removed, and the remaining base layers are transferred into a target system. A set of one or more upper/output layers are generated for the set of desired modulation orders, then transferred into, and trained in, the target system. The target system may store the transferred base layers and the trained set of one or more upper/-output layers for the set of desired modulation orders, and use them to modulate/demodulate any transmission having one of the set of desired modulation orders.

FIG. 4
Transfer Learning (TL)-based System for
Training a Neural Net Receiver/Demodulator

**Description**

TECHNICAL FIELD

This disclosure is directed generally to neural network and/or neuromorphic receivers/transmitters in telecommunication systems, and more specifically to transfer learning (TL)-based systems and methods for generating and transferring base layers of a fixed modulation order model into the target neural and/or neuromorphic network receiver/-transmitter and then training a set of different top layers for each desired modulation scheme in the target neural and/or neuromorphic network receiver/transmitter.

BACKGROUND

Artificial Intelligence (AI) and Machine Learning (ML) (AI/ML) techniques and technology are being increasingly adopted by a wide variety of industries. This includes the telecommunications industry, where the adoption of AI/ML may be opening a new era of improved system performance, higher efficiency, enhanced end user experience, etc. For example, existing Working Groups (WGs) within the 3rd Generation Partnership Project (3GPP) are increasingly turning to apply AI/ML to many aspects in present and presently developing mobile network systems (e.g., 5G, 5GNR, 5G-Advanced, etc.), as well as future mobile network systems (e.g., 6G et seq.). See, e.g., Lin, X., "An Overview of the 3GPP Study on Artificial Intelligence for 5G New Radio," arXiv preprint arXiv:2308.03515v1 (10 Aug. 2023) (hereinafter, "Lin 2023"); Hoydis, F. A. Aoudia, A. Valcarce and H. Viswanathan, "Toward a 6G AI-Native Air Interface," in IEEE Communications Magazine, vol. 59, no. 5, pp. 76-81, May 2021, doi: 10.1109/MCOM.001.2001187 (hereinafter, "Hoydis 2021"); and Yao, Y., Al-kanani, H., and Mwanje, S., "AI/ML Management for 5G Systems," published 11 Sept. 2023 at URL: https://www.3gpp.org/technologies/ai-ml-management (hereinafter "3GPP AI/ML Mgmt webpage 2023").

3GPP has not provided a description of any specific AI/ML methodologies and/or techniques to be used, but has rather listed three general approaches:

- **AI/ML Model Generalization:** aims to develop one model generalizable to different scenarios, configurations, and/or sites.
- **AI/ML Model Switching:** aims to develop a set of multiple different models which may be switched into use based on scenario, configuration, and/or site.
- **AI/ML Model Update:** aims for a flexible adaptation of the model structure or its parameters in response to changes in scenarios, configurations, and/or sites.

Regarding the radio air interface between a User Equipment (UE) and a network Base Station (BS), which may be, e.g., a Next Generation Node B (gNB or gNodeB), in a mobile telecommunication system, recent 3GPP Technical Reports (TRs) propose many specific AI/ML use cases, such as, for example: Channel State Information (CSI) enhancement, beam management, positioning accuracy enhancements, Radio Resource Management (RRM) measurement prediction, measurement event prediction, and Radio Link Failure (RLF) prediction. See 3GPP Technical Specification Group (TSG) Radio Access Network (RAN): Study on AI/ML for New Radio (NR) air interface, Release-18 (3GPP TR 38.843 v18.0.0 (2023-12)); draft 3GPP TSG RAN; Evolved Universal Terrestrial Radio Access (E-UTRA) and NR: Study on enhancements for AI/ML for NG-RAN, Release-19 (3GPP TR 38.743 v1.1.0 (2024-08)); draft 3GPP TSG RAN; Study on AI/ML for mobility in NR, Release-19 (3GPP TR 38.744 v0.0.2 (2024-08)).

Generally speaking, any systems, apparatuses, and/or methods which may apply specific AI/ML techniques and/or methodologies to management and operations of the air interface components of a telecommunications system may be beneficial.

SUMMARY

According to an aspect, there is provided a transfer learning, TL, -based method for training a target neural net demodulator, comprising:

training a neural net demodulator model for a fixed modulation order, wherein the neural net demodulator model comprises a plurality of base layers starting at an input and at least one output layer at an output;
transferring the plurality of base layers to the target neural net demodulator;
training a set of one or more training output layers matching each of a set of desired modulation orders at the target neural net demodulator by, for each of the set of one or more training output layers:

combining the transferred plurality of base layers and each of the set of one or more training output layers into a combination; and
training each combination to generate a trained set of the one or more training output layers, wherein each of the trained set matches one of the set of desired modulation orders; and

storing the plurality of transferred base layers and the trained set of the one or more training output layers at the target neural net demodulator.

In one embodiment, the at least one output layer at the output of the trained neural net demodulator model comprises a single output layer.

In one embodiment, the one or more training output layers of each of the set of one or more training output layers comprises a single output layer.

In one embodiment, the one or more training output layers of each of the set of one or more training output layers comprises a plurality of output layers.

In one embodiment, the at least one output layer at the output of the trained neural net demodulator model comprises a plurality of output layers.

In one embodiment, the one or more training output layers of each of the set of one or more training output layers comprises a plurality of output layers equal in number to the plurality of output layers comprising the at least one output layer at the output of the trained neural net demodulator model.

In one embodiment, the method further comprises:

generating the set of one or more training output layers matching each of the set of desired modulation orders.
In one embodiment, the fixed modulation order comprises a fixed modulation order $2^q$ for $q \in \theta = \{2, 4, \dots, M\}$; and wherein generating the set of one or more training output layers matching each of the set of desired modulation orders comprises:

generating a set of neural net demodulator models for modulation orders $2^z$, where $\forall z \neq q \in \theta = \{2, 4, \dots, M\}$; and removing the one or more training output layers from each of the generated set of the neural net demodulator models.

According to another aspect, there is provided a transfer learning, TL, - based method for training a target neural net demodulator, comprising:

training a fixed neural net demodulator model for a fixed modulation order $2^q$ for $q \in \theta = \{2, 4, \dots, M\}$, wherein the fixed neural net demodulator model comprises a plurality of base layers starting at an input and at least one output layer at an output;
generating a set of neural net demodulator models for modulation orders $2^z$, where $\forall z \neq q \in \theta = \{2, 4, \dots, M\}$, wherein each of the set of neural net demodulator models comprises a plurality of base layers starting at an input and one or more training output layers at an output;
transferring the plurality of base layers of the fixed neural net demodulator model to the target neural net demodulator;
transferring each of the one or more training output layers of each of the set of neural net demodulator models to the target neural net demodulator;
training, by the target neural net demodulator, for a set of desired modulation orders by, for each of the set of one or more training output layers:

combining the transferred plurality of base layers of the fixed neural net demodulator model and each of the transferred one or more training output layers into a combination; and
training each combination to generate a trained set of the one or more training output layers, wherein each of the trained set matches one of the set of desired modulation orders; and

storing the plurality of transferred base layers and the trained set of the one or more training output layers at the target neural net demodulator.

In one embodiment, the at least one output layer at the output of the fixed neural net demodulator model comprises a single output layer.

In one embodiment, the transferred one or more training output layers of each of the generated set of neural net demodulator models comprises a single output layer.

In one embodiment, the one or more training output layers of each of the generated set of neural net demodulator models comprises a plurality of output layers.

In one embodiment, the at least one output layer at the output of the fixed neural net demodulator model comprises a plurality of output layers.

In one embodiment, the one or more training output layers of each of the generated set of neural net demodulator models comprises a plurality of output layers equal in number to the plurality of output layers comprising the at least one output layer at the output of the fixed neural net demodulator model.

According to a further aspect, there is provided a transfer learning, TL, - based system for training a target neural net demodulator, comprising:

> at least one source processor with a non-transitory computer-readable memory storing instructions executable by the at least one source processor to:

>> train a neural net demodulator model for a fixed modulation order, wherein the trained neural net demodulator model comprises a plurality of base layers starting at an input and at least one output layer at an output; and transfer the plurality of base layers to the target neural net demodulator; and

> at least one target processor in the target neural net demodulator with a non-transitory computer-readable memory storing instructions executable by the at least one target processor to:

>> train a set of one or more training output layers matching each of a set of desired modulation orders by receiving the plurality of base layers transferred from the at least one source processor, and, for each of the set of one or more training output layers:

>>> combining the received plurality of base layers and each of the set of one or more training output layers into a combination; and
>>> training each combination to generate a trained set of the one or more training output layers, wherein each of the trained set matches one of the set of desired modulation orders; and

>> store the plurality of transferred base layers and the trained set of the one or more training output layers at the target neural net demodulator.

In one embodiment, the fixed modulation order of the trained neural net demodulator model comprises a fixed modulation order $2^q$ for $q \in \theta = \{2, 4, \dots, M\}$.

In one embodiment, the non-transitory computer-readable memory in the target neural net demodulator stores instructions executable by the at least one target processor to further:

> receive the set of one or more training output layers matching each of the set of desired modulation orders; wherein the one or more training output layers comprise one or more output layers from each of a set of generated neural net demodulator models, wherein the set of generated neural net demodulator models is for modulation orders $2^z$, where $\forall\, z \neq q \in \theta = \{2, 4, \dots, M\}$.

In one embodiment, the at least one output layer of the trained neural net demodulator model comprises a single layer; and wherein the one or more training output layers of each of the set of one or more training output layers comprises a single output layer.

In one embodiment, the at least one output layer of the trained neural net demodulator model comprises a plurality of output layers; and wherein the one or more training output layers of each of the set of one or more training output layers comprises a plurality of output layers equal in number to the plurality of output layers comprising the at least one output layer of the trained neural net demodulator model.

In one embodiment, the at least one output layer of the trained neural net demodulator model comprises a single layer; and wherein the one or more training output layers of each of the set of one or more training output layers comprises a plurality of output layers.

BRIEF DESCRIPTION OF DRAWINGS

Features of the present disclosure are illustrated by way of example and not limited in the following figure(s), in which like numerals indicate like elements, in which:

FIG. 1 is a block diagram illustrating a conventional mobile telecommunications transmitter/receiver system, to which examples of the present disclosure may be applied.

FIG. 2A is a block diagram illustrating a conventional Orthogonal Frequency Division Multiplexing (OFDM) transmitter transmitting to an OFDM neural net receiver, according to an example of the present disclosure.

FIG. 2B is a block diagram illustrating an Orthogonal Frequency Division Multiplexing (OFDM) neural net transmitter transmitting to an OFDM neural net receiver, according to an example of the present disclosure.

FIG. 2C is a block diagram illustrating a configuration where both the transmitting side and the receiving side may switch between conventional Orthogonal Frequency Division Multiplexing (OFDM) modulation/demodulation and neural net OFDM modulation/demodulation, according to an example of the present disclosure.

FIG. 3 is a block diagram illustrating an implementation of a neural net demodulator where each modulation scheme has its own full neural network model, according to an example of the present disclosure.

FIG. 4 is a block diagram illustrating transfer learning (TL)-based system for training a neural net receiver/demodulator, according to examples of the present disclosure.

FIG. 5 is a flow diagram illustrating a TL-based method for training a neural net receiver/demodulator, according to examples of the present disclosure.

FIGS. 6A and 6B are a block diagram and a flow diagram illustrating a TL-based system and method, respectively, for a TL-minimum approach to training a neural net receiver/demodulator, according to an example of the present disclosure.

FIGS. 7A and 7B are a block diagram and a flow diagram illustrating a **TL-**based system and method, respectively, for a TL-medium approach to training a neural net receiver/demodulator, according to an example of the present disclosure.

FIGS. 8A and 8B are a block diagram and a flow diagram illustrating a **TL-**based system and method, respectively, for a TL-maximum approach to training a neural net receiver/demodulator, according to an example of the present disclosure.

FIG. 9 is a flow diagram illustrating a TL-based method for training a target neural net demodulator, according to examples of the present disclosure.

FIG. 10 is a flow diagram illustrating a TL-based method for training a target neural net demodulator, according to examples of the present disclosure.

FIG. 11 is a block diagram illustrating a TL-based system for training a target neural net demodulator, according to examples of the present disclosure.

## DETAILED DESCRIPTION

For simplicity and illustrative purposes, the present disclosure is described by referring mainly to examples and embodiments thereof. In the following description, numerous specific details are set forth in order to provide a thorough understanding of the present disclosure. It will be readily apparent, however, that the present disclosure may be practiced without limitation to these specific details. In other instances, some methods and structures readily understood by one of ordinary skill in the art have not been described in detail so as not to unnecessarily obscure the present disclosure. As used herein, the terms "a" and "an" are intended to denote at least one of a particular element, the term "includes" means includes but not limited to, the term "including" means including but not limited to, and the term "based on" means based at least in part on.

As used herein, the terms "AI," "ML," "Artificial Intelligence," and/or "Machine Learning," and/or "AI/ML" may refer generally to methodologies, techniques, and/or technology that creates one or models by learning/training using a large dataset of input such that the one or more models may be used to infer/produce results/output based on new and/or real-time input (and the term "AI/ML" will be treated as a singular noun herein). For example, AI/ML as discussed herein includes any and all forms of AI/ML described in Lin 2023 and in all past, present, and future 3GPP documentation.

As briefly referred to above, while AI/ML is being discussed generally for use in telecommunications systems/networks, specific deployments/implementations have yet to be standardized and/or adopted, including, for example, AI/ML implementations for the air interface components in a mobile telecommunications system, such as, for example, those defined by the 3GPP standards.

According to examples of the present disclosure, a transfer learning (TL)-based methodology is provided to replace specific signal processing blocks at the transmitter and receiver to demodulate modulation schemes with different modulation orders in single antenna or multi-antenna systems in transmissions with or without pilots. In some examples, a neural and/or neuromorphic net modulation/demodulation model with a fixed modulation scheme may be employed in the TL-based methodology to create and transfer base layers into a target neural and/or neuromorphic net modulator/demodulator, where a set of one or more top/output layers may then be trained in the target neural and/or neuromorphic net modulator/demodulator for multiple modulation schemes. In some examples, different TL approaches are provided with different numbers of transferred base layers, different numbers of top/output layers trained in the target neural and/or neuromorphic net modulator/demodulator, and different neural and/or neuromorphic net modulation/demodulation model generation approaches.

According to examples of the present disclosure, systems, methods, and apparatuses are provided for using TL to enable a neural and/or neuromorphic network receiver and/or transmitter to demodulate and/or modulate different modulation orders using transferred base layers from a trained source and one or more upper/output layers trained in the target neural and/or neuromorphic network receiver and/or transmitter.

Although the present disclosure may often refer to neural network receivers/transmitters in the various examples, it should be understood that the present disclosure applies equally to neuromorphic network receivers/ transmitters, as would be understood by one of ordinary skill in the art.

According to examples of the present disclosure, multiple transfer learning approaches may be used, which may differ based on the number of layers in the base set, the number of layers which are switchable/replaceable, and the training on the target side. In some examples, three different transfer learning approaches are provided: a TL-minimum approach, a TL-medium approach, and a TL-maximum approach.

As discussed in further detail below, the systems, methods, and apparatuses according to examples of the present disclosure may provide a number of benefits and/or advantages, including, but not limited to, reduced memory requirements (which typically leads to reduced heat generation), simplified system design and operation, and increased flexibility to optimize the system hardware.

Further advantages and benefits of the devices, systems, and methods provided herein are described in greater detail below, while other benefits and advantages would be readily apparent to one of ordinary skill in the art even if they are not specifically discussed herein.

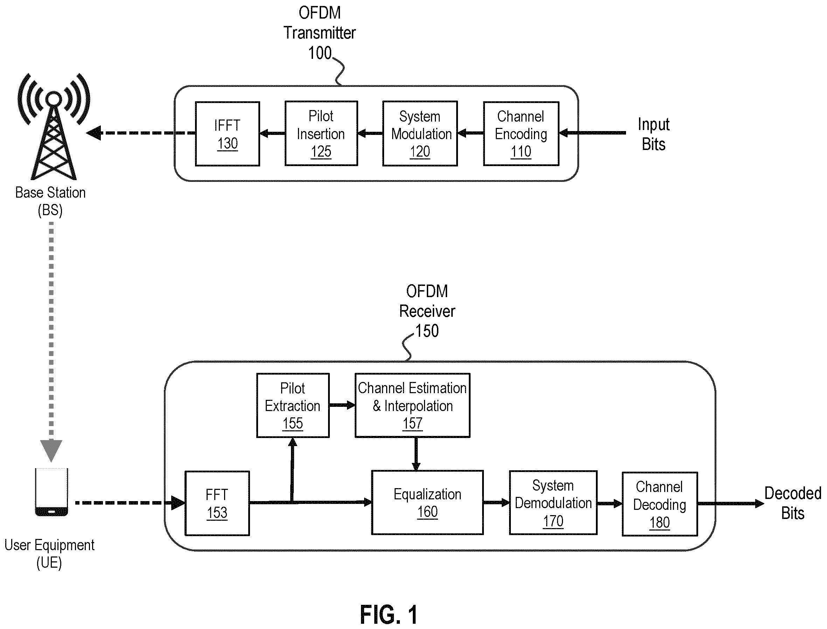

FIG. 1 is a block diagram illustrating a conventional mobile telecommunications transmitter/receiver system, to which examples of the present disclosure may be applied. FIG. 1 specifically illustrates a Multiple Input Multiple Output (MIMO) Orthogonal Frequency Division Multiplexing (OFDM) system including both a conventional OFDM transmitter 100, which may be, e.g., a network base station (BS), and a conventional OFDM receiver 150, which may be user equipment (UE), such as, e.g., a cell phone. As would be understood by one of ordinary skill in the art, the conventional OFDM transmitter 100 and conventional OFDM receiver 150 in FIG. 1 may be part of a 3GPP system, such as described in, for example, 3GPP TSG RAN; NR; NR and NG-RAN Overall Description; Stage 2, Release-18 (3GPP TS 38.300 v18.2.0 (2024-06)), and other such similar 3GPP documentation, as well as more generally described in, for example, X. Lin, "An Overview of 5G Advanced Evolution in 3GPP Release 18," in IEEE Communications Standards Magazine, vol. 6, no. 3, pp. 77-83, September 2022, doi: 10.1109/MCOMSTD.0001.2200001 (hereinafter, "Lin 2022").

FIG. 1 is provided to illustrate the explanation below, and may omit aspects, features, and/or components not germane to examples of the present disclosure, as would be understood by one of ordinary skill in the art. For example, many more functional blocks may be used in the process of transmitting and receiving OFDM symbols than shown in FIG. 1, as would be understood by one of ordinary skill in the art. Moreover, examples of the present disclosure are in no way limited by FIG. 1, as examples of the present disclosure may apply to apply to non-OFDM systems, as well as one or more input/output channel schemes, such as Single Input Single Output (SISO), Single Input Multiple Output (SIMO), and/or Multiple Input Single Output (MISO) in addition to, or in lieu of, MIMO.

As shown in FIG. 1, input bits for transmission by the conventional OFDM transmitter 100 are passed through a channel encoding block 110, where, among other things, redundant bits are added for error correction, and then the encoded bits passed through a system modulation block 120, where the encoded bits are converted into complex baseband symbols with a modulation order $2^q$, for $q \in \theta = \{2, 4, ...\}$, e.g., Quadrature Phase-Shift Keying (QPSK) or 4-Quadrature Amplitude Modulation (QAM) when q = 2 ($2^q$ = 4), 16-QAM when q = 4 ($2^q$ = 16), 64-QAM when q = 8 ($2^q$ = 64), and so on. These complex baseband symbols may be represented as an OFDM symbol grid, consisting of $N_T$ OFDM symbols and $N_{SC}$ subcarriers. In some examples, pilot signals may be inserted in specific OFDM symbols and subcarriers by pilot insertion block 125, while data is inserted in the remaining OFDM symbols and subcarriers. The OFDM symbol grid created by system modulation block 120 (and, in some examples, the pilot insertion block 125) is converted from the frequency domain into the time domain by an Inverse Fast Fourier Transform (IFFT) block 130 and then transmitted by the conventional OFDM transmitter 100.

The transmission received by the conventional OFDM receiver 150 may be written as Equation (1) below:

$$y(n) = h(n) \circledast x(n) + w(n) \qquad (1)$$

where *y(n)* denotes the received signal in the time domain; *h(n)* denotes the channel between the conventional OFDM transmitter 100 and the conventional OFDM receiver 150 in the time domain; *x(n)* denotes the originally transmitted signal in the time domain; *w(n)* denotes the Additive White Gaussian Noise (AWGN) of the channel in the time domain; and $\circledast$ represents the circular convolution operation.

At the conventional OFDM receiver 150, the time domain received signal y(n) is converted into the frequency domain by a Fast Fourier Transform (FFT) block 153, resulting in the frequency domain signal Y(k), which may be written as Equation (2) below:

$$Y(k) = H(k)X(k) + W(k) \qquad (2)$$

where *Y(k)* denotes the received signal in the frequency domain; *H(k)* denotes the channel between the conventional OFDM transmitter 100 and the conventional OFDM receiver 150 in the frequency domain; *X(k)* denotes the originally transmitted signal in the frequency domain; and *W(k)* denotes the AWGN in the frequency domain.

The pilot signals are extracted from *Y(k)* by a pilot extraction block 155, from which a channel estimation & interpolation block 157 estimates the channel and interpolates the OFDM grid, which is provided with the received signal *Y(k)* in the frequency domain to equalization block 160 which removes detrimental channel impairments and provides the received OFDM grid to a system demodulation block 170, which demodulates the received OFDM grid according to the appropriate modulation scheme and provides the resulting Least Likelihood Ratio (LLR) values to the channel decoding block 180, which uses LLR values to produce the decoded bits.

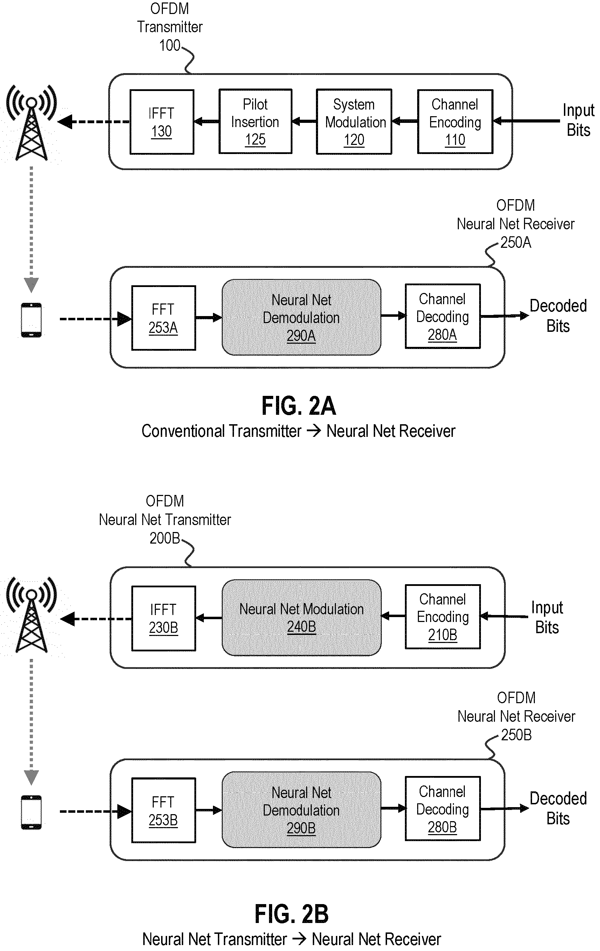

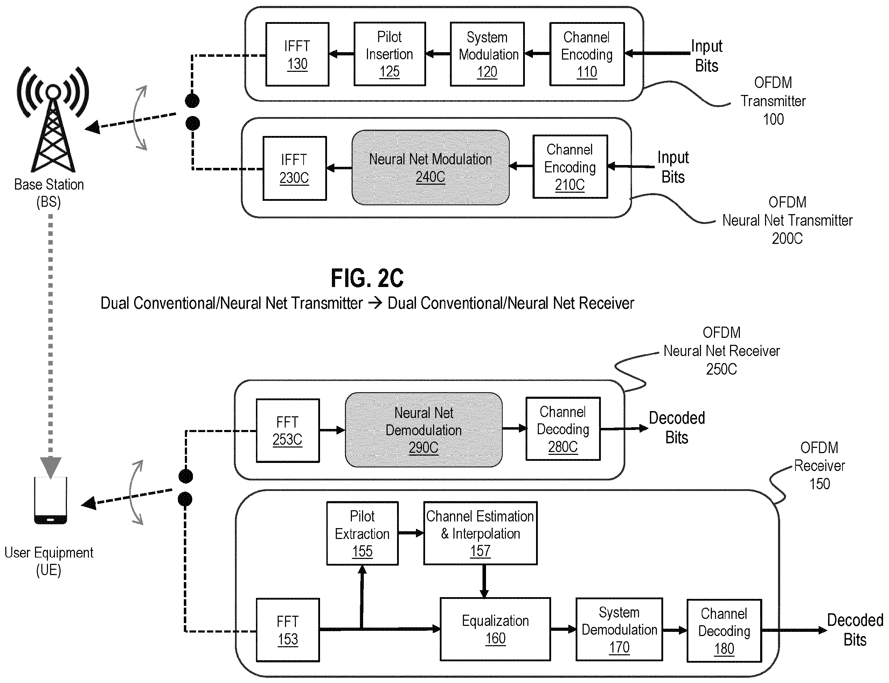

FIGS. 2A-2C are block diagrams illustrating neural net receivers and, in some cases, neural net transmitters in various configurations, according to examples of the present disclosure. FIG. 2A is a block diagram illustrating a conventional OFDM transmitter 100 transmitting to an OFDM neural net receiver 250A; FIG. 2B is a block diagram illustrating an OFDM neural net transmitter 200B transmitting to an OFDM neural net receiver 250B; and FIG. 2C is a block diagram illustrating a configuration where both the transmitting side and the receiving side may switch between conventional modulation/demodulation and neural net modulation/demodulation. FIGS. 2A-2C are provided to illustrate examples of the present disclosure, and may omit aspects, features, and/or components not germane to examples of the present disclosure, as would be understood by one of ordinary skill in the art. As mentioned above, although the present disclosure may often refer to neural network receivers/transmitters in the various examples, it should be understood that the present disclosure applies equally to neuromorphic network receivers/ transmitters, as would be understood by one of ordinary skill in the art.

In FIG. 2A, the conventional OFDM transmitter 100 is equivalent to the conventional OFDM transmitter 100 in FIG. 1, but an OFDM neural net receiver 250A replaces the conventional OFDM receiver 150 of FIG. 1. As shown in FIG. 2A, a neural net demodulation system 290A in the OFDM neural net receiver 250A replaces the functionality and operations of the pilot extraction block 155, the channel estimation & interpolation block 157, the equalization block 160, and the system demodulation block 170 of the conventional OFDM receiver 150 in FIG. 1. More specifically, the OFDM neural net receiver 250A receives the OFDM *y(n)* signal in the time domain and a Fast Fourier Transform (FFT) block 253A converts it into the frequency domain complex OFDM signal *Y(k),* which is the input for the neural net demodulation system 290A, which produces LLR values as input to a channel decoding block 280A, which uses the LLR values to produce the decoded bits.

The possible implementations of the neural net demodulation system 290 in FIGS. 2A-2C in accordance with examples of the present disclosure are discussed in detail with reference to the drawings further below.

In FIG. 2B, an OFDM neural net transmitter 200B replaces the conventional OFDM transmitter 100 from FIG. 1 and an OFDM neural net receiver 250B replaces the conventional OFDM receiver 150 of FIG. 1. As shown in FIG. 2B, a neural net modulation system 240B in the OFDM neural net transmitter 200B replaces the functionality and operations of the pilot insertion block 125 and the system modulation block 120 of the conventional OFDM transmitter 100 from FIG. 1. In some examples, the OFDM neural net transmitter 200B may not replace the pilot insertion block 125, either because the system is pilotless or because the pilot insertion block 125 remains in place (separate from, and connected to, the neural net modulation system 240B). In such examples, the pilot extraction block 155 or some form thereof may also remain in place on the receiving side (separate from, and connected to, the neural net demodulation system 290B) or may not be needed in a pilotless system.

Returning to FIG. 2B, the OFDM neural net transmitter 200B receives the input bits for transmission, which are passed through a channel encoding block 210B, where, among other things, redundant bits are added for error correction, and then the encoded bits are passed through the neural net modulation system 240B which produces the complex OFDM symbol grid (according to the appropriate modulation scheme), which is then converted from the frequency domain into the time domain by an Inverse Fast Fourier Transform (IFFT) block 230B and transmitted by the OFDM neural net transmitter 200B. Similarly to FIG. 2A, the OFDM neural net receiver 250B receives the OFDM *y(n)* signal in the time domain and a Fast Fourier Transform (FFT) block 253B converts it into the frequency domain complex OFDM signal *Y(k),* which is the input for the neural net demodulation system 290A, which produces LLR values as input to a channel decoding block 280B, which uses the LLR values to produce the decoded bits

Examples according to the present disclosure may transmit and receive OFDM signals with and/or without pilot signals. For example, the conventional OFDM transmitter 100 in FIG. 2A may include the insertion of pilot signals into the OFDM resource grid (by the pilot insertion block 125), but the OFDM neural net receiver 250A replaces the functionality of the pilot extraction block 155 from FIG. 1 with the neural net demodulation system 290A. By contrast, as another example, the transmissions of the OFDM neural net transmitter 200B in FIG. 2B have no pilot signals, *i.e.,* pilotless transmission, which may improve system throughput and efficiency compared to the system in FIG. 2A, where the transmissions have inserted pilot signals.

In FIG. 2C, the transmitting side may switch between the conventional OFDM transmitter 100 and an OFDM neural net transmitter 200C (with channel encoding block 210C, neural net modulation system 240C, and IFFT block 230C), while the receiving side may switch between the conventional OFDM receiver 150 and an OFDM neural net receiver 250C (with FFT block 253C, neural net demodulation system 290C, and channel decoding block 280C).

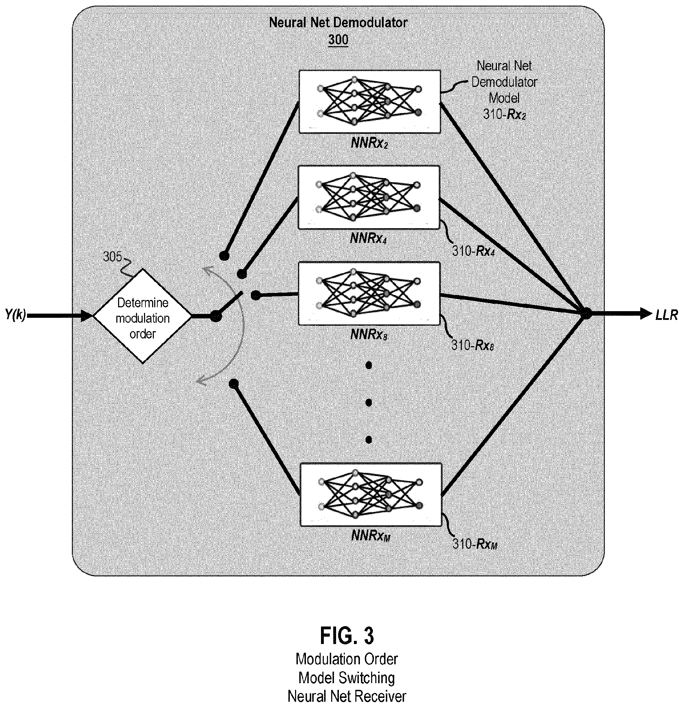

FIG. 3 is a block diagram illustrating an implementation of a neural net demodulator 300 where each modulation scheme has its own full/complete neural network model, according to an example of the present disclosure. In other words, the neural net demodulator 300 in FIG. 3 employs AI/ML model switching in order to demodulate transmissions with different modulation schemes. The neural net demodulator 300 in FIG. 3 may be employed to receive and demodulate signals at either the network side (e.g., the base station) or the user side (i.e., the UE). FIG. 3 is provided to illustrate an example of a neural net demodulator 300 where each modulation scheme has its own neural network according to the present disclosure, and may omit aspects, features, and/or components not germane to this example of the present disclosure, as would be understood by one of ordinary skill in the art.

As shown in FIG. 3, the neural net demodulator 300 has the neural net demodulator model 310-$\text{Rx}_q$ for modulation order $2^q$ for $q \in \theta = \{2, 4, ... , M\}$, corresponding to modulation schemes QPSK, 16-QAM, and so on. The neural net demodulator 300 receives the incoming transmission signal *Y(k)* in the frequency domain and determines, at block 305, the modulation scheme or order of the received signal, and then directs the incoming transmission signal *Y(k)* to the neural net demodulator model 310-Rx having the determined modulation scheme or order. Each neural net demodulator model 310-Rx in FIG. 3 may include a convolutional neural network (CNN) which may have multiple layers, including one or more residual network (ResNet) layers, as represented by the multi-layer graph in each neural net demodulator model 310-Rx in FIG. 3. Although the multi-layer graph is the same in each of the neural net demodulator models 310-Rx in FIG. 3, the multi-layer graphs for each neural net demodulator model 310-Rx would have a different number of layers, and weights, etc., depending on the modulation order. For more information and details concerning the design of convolutional neural networks (CNN), with or without residual network (ResNet) layers, for the demodulation of OFDM signals, see, e.g., M. Honkala, D. Korpi and J. M. J. Huttunen, "DeepRx: Fully Convolutional Deep Learning Receiver," in IEEE Transactions on Wireless Communications, vol. 20, no. 6, pp. 3925-3940, June 2021, doi: 10.1109/TWC.2021.3054520 (hereinafter, "Honkala 2021"); F.A. Aoudia and J. Hoydis, "End-to-End Learning for OFDM: From Neural Receivers to Pilotless Communication," in IEEE Transactions on Wireless Communications, vol. 21, no. 2, pp. 1049-1063, Feb. 2022, doi: 10.1109/TWC.2021.3101364 (hereinafter, "Aoudia 2022"); F. A. Aoudia and J. Hoydis, "Trimming the Fat from OFDM: Pilot- and CP-less Communication with End-to-end Learning," 2021 IEEE International Conference on Communications Workshops (ICC Workshops), Montreal, QC, Canada, 2021, pp. 1-6, doi: 10.1109/ICCWorkshops50388.2021.9473605 (hereinafter, "Aoudia 2021"); S. Cammerer et al., "A Neural Receiver for 5G NR Multi-User MIMO," 2023 IEEE Globecom Workshops (GC Wkshps), Kuala Lumpur, Malaysia, 2023, pp. 329-334, doi: 10.1109/GCWkshps58843.2023.10464486 (hereinafter, "Cammerer 2023"); R. Mei, Z. Wang and X. Chen, "CRNN-ResNet: Combined CRNN and ResNet Networks for OFDM Receivers," in IEEE Transactions on Cognitive Communications and Networking, vol. 14, no. 4, August 2021; doi: 10.1109/TCCN.2024.3378225 (hereinafter, "Mei 2021"); and K. He, X. Zhang, S. Ren and J. Sun, "Deep Residual Learning for Image Recognition," 2016 IEEE Conference on Computer Vision and Pattern Recognition (CVPR), Las Vegas, NV, USA, 2016, pp. 770-778, doi: 10.1109/CVPR.2016.90 (hereinafter, "He 2016").

Using model switching for changing modulation orders, such as shown in the example of FIG. 3, may incur a large memory cost because model switching may require the storage of parameters for $|\theta|$ different neural net demodulator models 310-$\text{Rx}_q$, i.e., $|\theta|$ different neural network models $NNRx_q$, in order to be able to demodulate $|\theta|$ modulation schemes with different modulation orders, where $|\theta|$ denotes the cardinality of the set $\theta$. In other words, memory storage for $|\theta|$ full neural networks may be required, one for each possible modulation scheme, which may be particularly challenging for memory constrained devices, such as UEs and Internet of Things (IoT) devices. This problem will be further exacerbated in 6G networks, where even higher modulation orders, such as 2048-QAM, are being studied for possible use in order to cater the spectral efficiency requirements of the future devices. Accordingly, a UE might need to save 11 different neural networks models for 11 different types of modulation orders.

Using model generalization, i.e., using a single AI/ML model to cover all possible modulation schemes, may also be problematic. This is because AI-based algorithms may require large datasets for varying conditions so that training remains as generalizable as possible in different conditions during testing. Creating such large datasets may require large scale data collection, extensive labelling of data, large amounts of data processing, etc., making it a very costly and time-consuming process.

However, using transfer learning (TL) according to examples of the present disclosure may overcome many of these limitations. More specifically, by training a complete multi-layer neural net demodulator model for a fixed modulation scheme/order, and then utilizing TL to transfer most of the layers of the multi-layer neural net demodulator model except for one or more of the upper/output layers into a target demodulator, a set of different one or more upper/output model layers may be created and/or trained in the target demodulator for different modulation schemes/orders. Accordingly, instead of having a set of complete/full multi-layer demodulator models for every possible modulation scheme, such as is shown in FIG. 3, the target demodulator may have the transferred "base layers" from the trained full multi-layer model (i.e., most of the layers of the trained full multi-layer model, starting from the input end, except for one or more upper/output layers) which may be used for all the possible modulation schemes, and a set of different upper/output layers which will complete the multi-layer demodulator model at the target demodulator for different modulation schemes. Roughly speaking, different upper/output layers would be swapped in and out from on top of the transferred base layers to create different modulation schemes/orders. Also, unlike the base layers, these different swappable upper/output layers may be trained at the target demodulator.

In this manner, only the parameters, such as the weights, etc., of the transferred base layers and the parameters of the set of swappable upper/output layers need to be stored to employ a number of modulation schemes/orders-i.e., without storing all of the parameters needed to store a set of complete/full multi-layer demodulator models for each modulation scheme, such as is shown in FIG. 3. For example, and as explained in further detail below, a full 64-QAM multi-layer demodulator model might be trained, its base layers transferred into a target demodulator and a set of different swappable one or more upper/output layers trained at the target demodulator on top of those transferred base layers, where this set may include (i) the one or more upper/output layers trained to form, when on top of the base layers, the full 64-QAM multi-layer demodulator model, (ii) the one or more upper/output layers trained to form, when on top of the base layers, a full 16-QAM multi-layer demodulator model, and (iii) the one or more upper/output layers trained to form, when on top of the base layers, a full 4-QAM multi-layer demodulator model. In some examples, the one or more upper/output layers trained with the base layers in the full trained source model may be transferred as well as the base layers in order to start the process of creating a set of different, swappable upper/output layers in the target demodulator.

There may be some clear advantages to this approach:

1. Reduced memory requirements - only the transferred base layers and the set of one or more upper/output layers for different modulation orders are stored.

  a. Reduced power consumption: since memory/storage hardware consume power when storing, retrieving, and refreshing stored data, this approach may reduce the system's overall power consumption by having less stored data.
  b. Reduced heat generation: generally speaking, reduced memory usage leads to less heat production, which may reduce the energy required for cooling components.

2. Simplified system design - reducing the memory/storage required for neural network demodulation models may simplify system design.

  a. Fewer data transfers: if less memory/storage is used to store neural network demodulation models, data movement (both within the demodulation system and to/from other systems) may be reduced, resulting in energy savings.
  b. Reduced redundancy: using the transferred base layers in all of the demodulation models minimizes redundancy, leading to more efficient operations.

3. Optimization opportunities - having a large part of demodulation system remain the same (*i.e.*, the transferred base layers) allows more in-depth optimization for energy efficiency.

  a. Custom hardware optimization: hardware may be optimized specifically for the large part of the demodulation system which remains the same (*i.e.*, the transferred base layers), tailoring memory and computational resources to that part's unique requirements, potentially improving efficiency.
  b. Specialized hardware: having a large part of demodulation system remain the same (*i.e.*, the transferred base layers), specialized hardware, such as, *e.g.*, Application Specific Integrated Circuits (ASICs) and/or Field-Programmable Gate Arrays (FPGAs), may be designed to be highly efficient for that specific part.

## TRANSFER LEARNING (TL)

Generally speaking, transfer learning (TL) utilizes the already existing knowledge of a trained neural network in a source domain for something similar or a related task in a target domain. See generally, *e.g.*, F. Zhuang et al., "A Comprehensive Survey on Transfer Learning," in Proceedings of the IEEE, vol. 109, no. 1, pp. 43-76, Jan. 2021, doi:

10.1109/JPROC.2020.3004555 (hereinafter, "Zhuang 2021"); and S. J. Pan and Q. Yang, "A Survey on Transfer Learning," in IEEE Transactions on Knowledge and Data Engineering, vol. 22, no. 10, pp. 1345-1359, Oct. 2010, doi: 10.1109/TKDE.2009.191 (hereinafter, "Pan & Yang 2010"). The following helpful foundational definitions are based on Zhuang 2021 and Pan & Yang 2010:

*Definition 1 (Domain):* A domain $\mathcal{D}$ is composed of the feature space $\mathcal{X}$ and the probability marginal distribution $P(X)$. In other words, $\mathcal{D} = \{ \mathcal{X}, P(X)\}$, where the symbol $X$ denotes an instance set, which is defined as $X = \{x | x_i \in \mathcal{X}, i = 1, ... , n\}$.

*Definition 2 (Task):* A task T is composed of a label space $\mathcal{Y}$ and a decision or learnable function $f$, that is $\mathcal{T} = \{ \mathcal{Y}, f\}$. The decision or learnable function $f$ is an implicit one, which is expected to be learned from the sample data.

*Definition 3 (Transfer Learning):* Given a source domain $\mathcal{D}_S$ and learning task $\mathcal{T}_S$, a target domain $\mathcal{D}_T$ and learning task $\mathcal{T}_T$, transfer learning aims to help improve the learning of the target predictive function $f_T(\cdot)$ in $\mathcal{D}_T$ using the knowledge in $\mathcal{D}_S$ and $\mathcal{T}_S$, where $\mathcal{D}_S \neq \mathcal{D}_T$, or $\mathcal{T}_S \neq \mathcal{T}_T$.

The learnable/target predictive function $f$ learns from the feature space $\mathcal{X}$ and the label space $\mathcal{Y}$. For neural net demodulator models, such as discussed in reference to FIGS. 2A-2C and 3, the feature space $\mathcal{X}$ may be the frequency domain OFDM resource grid of the received signal and the label space $\mathcal{Y}$ is the corresponding LLR values for the resource grid.

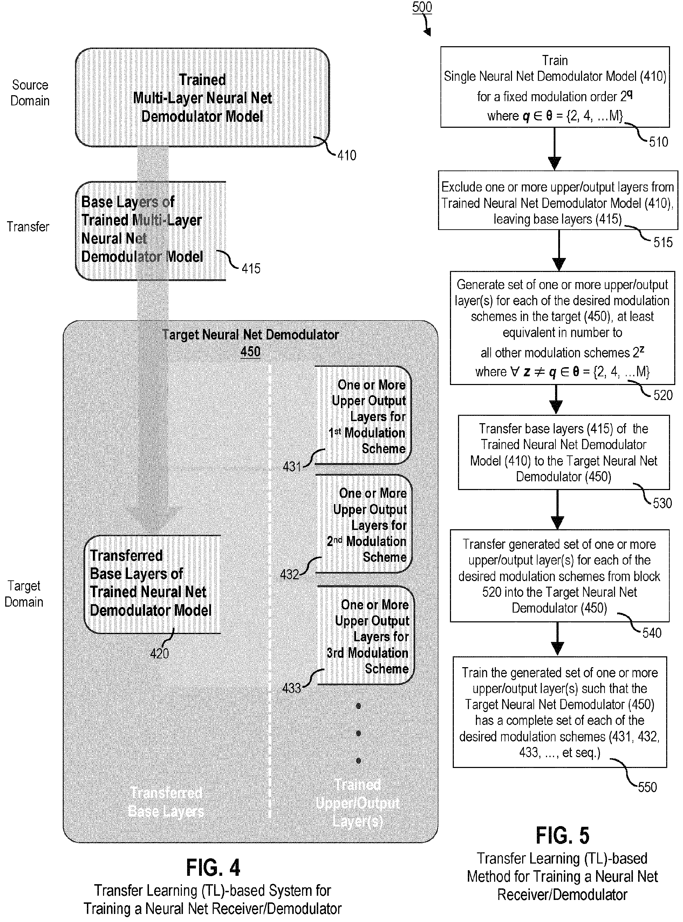

FIG. 4 is a block diagram illustrating TL-based system for training a neural net receiver/demodulator, according to examples of the present disclosure. FIG. 5 is a flow diagram illustrating a corresponding transfer learning TL-based method for training a neural net receiver/demodulator, according to examples of the present disclosure. As mentioned above, although the present disclosure may often refer to neural network receivers/transmitters in the various examples, it should be understood that the present disclosure applies equally to neuromorphic network receivers/ transmitters, as would be understood by one of ordinary skill in the art.

In FIG. 4, a single multi-layer neural net demodulator model 410 is trained in the source domain for a fixed modulation order $2^q$ for $q \in \theta = \{2, 4, ... , M\}$. As discussed above in relation to the neural net demodulation system 290 in FIGS. 2A-2C and the neural net demodulator 300 in FIG. 3, the single multi-layer neural net demodulator model 410 is similarly performing the functions of channel estimation, channel interpolation, channel equalization, and symbol demodulation. When these four functions are performed collectively by the single multi-layer neural net demodulator model 410 in FIG. 4, it may be conjectured that the initial/lower/input layers of the single multi-layer neural net demodulator model 410 may be performing channel based operations and equalization while the last/upper/output layers may be performing symbol decoding and producing LLR values. Based at least in part on this conjecture, examples of the present disclosure separate out the last/upper/output layers of the single multi-layer neural net demodulator model 410 which may be performing symbol decoding and producing LLR values, and only transfer the "base layers" 415 of the single multi-layer neural net demodulator model 410, *i.e.*, most of the layers, starting from the initial/lower/input layers and only excluding one or more of the very last/upper/output layers of the single multi-layer neural net demodulator model 410.

As shown in FIG. 4, once transferred into the target domain, *i.e.*, a target neural net demodulator 450, the base layers 415 become the base layers 420 of the target neural net demodulator 450. A set of one or more upper/output layers may be trained at the target neural net demodulator 450 to form other modulation schemes $2^z$, where $\forall z \neq q \in \theta = \{2, 4, ... , M\}$, when combined with the transferred base layers 420, *i.e.*, one or more upper/output layers 431 for a 1st modulation scheme, one or more upper/output layers 432 for a 2nd modulation scheme, one or more upper/output layers 433 for a 3rd modulation scheme, ... et seq.

For example, the single multi-layer neural net demodulator model 410 may be trained as a full 256-QAM model in the source domain, its base layers 415 transferred into the target neural net demodulator 450 in the target domain, and then a set of one or more upper/output layers trained in the target neural net demodulator 450 to form different demodulation models, such as, for example, (i) the one or more upper/output layers 431 may be trained to form, when on top of the base layers 420, a 64-QAM multi-layer demodulator model (the 1st modulation scheme), (ii) the one or more upper/output layers 432 may be trained to form, when on top of the base layers 420, a 16-QAM multi-layer demodulator model (the 2nd modulation scheme), and (iii) the one or more upper/output layers 433 may be trained to form, when on top of the base layers 420, a 4-QAM multi-layer demodulator model (the 3rd modulation scheme).

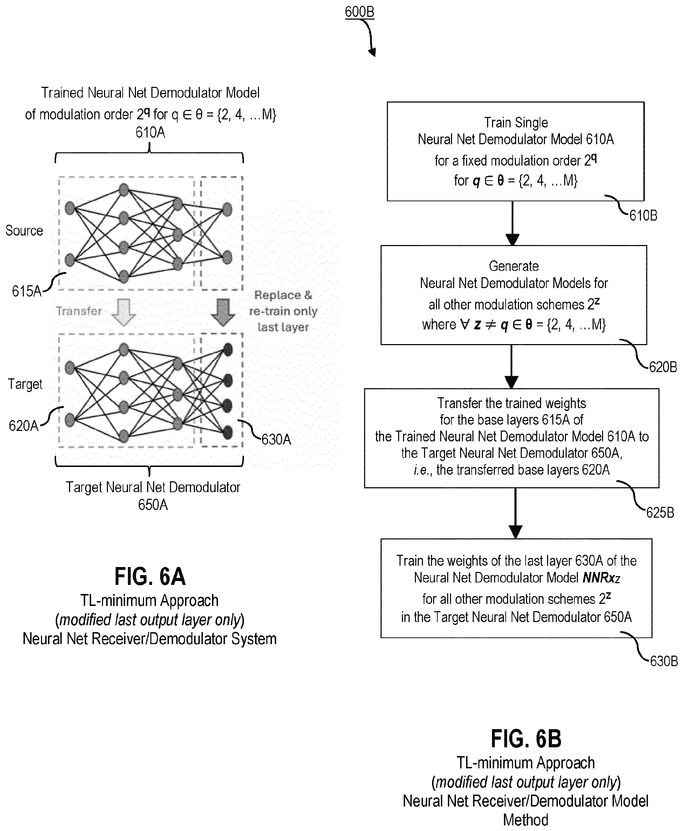

As other examples, FIGS. 6A-6B, 7A-7B, and 8A-8B described in further detail below illustrate three different approaches to TL in accordance with examples of the present disclosure: the TL-minimum approach, the TL-medium approach, and the TL-maximum approach, respectively. More specifically, in the TL-minimum approach illustrated in

**EP 4 718 322 A1**

FIGS. 6A and 6B, only the last layer is excluded from the base layers 415 of the trained source multi-layer neural net demodulator model, which are then transferred to the target multi-layer neural net demodulator 450 to be employed as base layers 420, and thus a set of last single layers are trained in the target multi-layer neural net demodulator 450 to form different modulation schemes, i.e., a single upper/output layer 431 for a 1st modulation scheme, a single upper/output layer 432 for a 2nd modulation scheme, a single upper/output layer 433 for a 3rd modulation scheme, et seq.

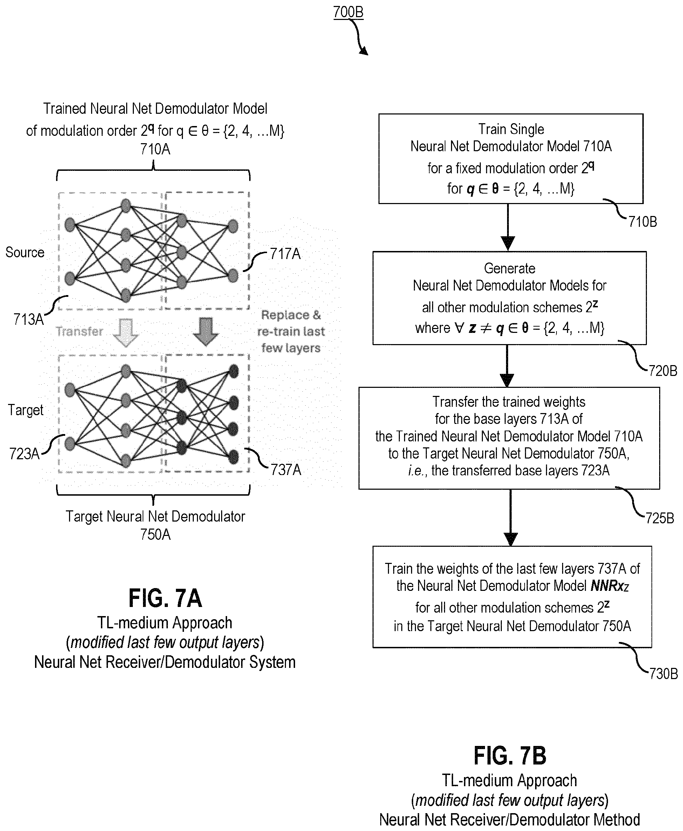

In the TL-medium approach illustrated in FIGS. 7A and 7B, several layers are excluded from the base layers 415 of the trained source multi-layer neural net demodulator model, which are then transferred to the target multi-layer neural net demodulator 450 to be employed as base layers 420, and thus a set of last multiple layers are trained in the target multi-layer neural net demodulator 450 to form different modulation schemes, i.e., multiple upper/output layers 431 for a 1st modulation scheme, multiple layers 432 for a 2nd modulation scheme, multiple layers 433 for a 3rd modulation scheme, et seq. In the TL-medium approach of FIGS. 7A and 7B, the several layers excluded from the base layers 415 of the trained source multi-layer neural net demodulator model and the multiple upper/output layers 431, 432, 433, et seq. are all the same size (e.g., if 3 layers were excluded from the trained source multi-layer neural net demodulator model to form base layers 415, then each of the multiple upper/output layers 431, 432, 433, et seq. are 3 layers).

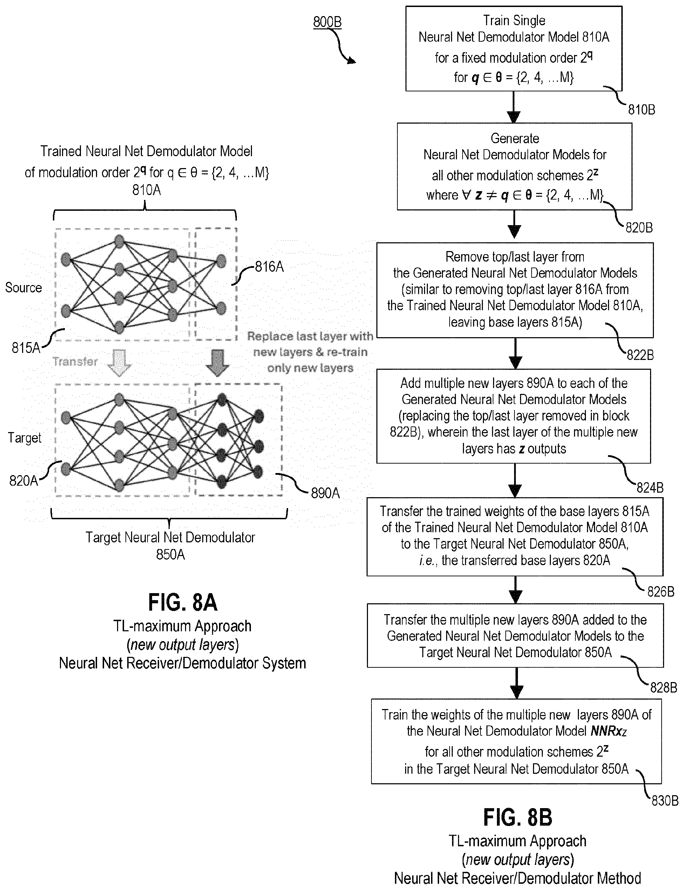

In the TL-maximum approach illustrated in FIGS. 8A and 8B, only a single layer is excluded from the base layers 415 of the trained source multi-layer neural net demodulator model (just like in the TL-minimum approach), which are then transferred to the target multi-layer neural net demodulator 450 to be employed as base layers 420. However, in the TL-maximum approach, the set of last upper/output layers 431, 432, 433, et seq., trained in the target multi-layer neural net demodulator 450 to form different modulation schemes are each a multiplicity of layers, thereby making the full model in the target multi-layer neural net demodulator 450 larger than the source multi-layer neural net demodulator model 410 and providing more flexibility. Thus, in the TL-maximum approach of FIGS. 8A and 8B, the single layer excluded from the base layers 415 of the trained source multi-layer neural net demodulator model and the multiple upper/output layers 431, 432, 433, et seq. are different sizes (only one layer is excluded from the trained source multi-layer neural net demodulator model to form base layers 415, but each of the multiple upper/output layers 431, 432, 433, et seq. may have 2 or more layers).

FIG. 5 is a flow diagram illustrating a method 500 applying TL to a multi-layer neural net demodulator model in accordance with examples of the present disclosure. The method 500 shown in FIG. 5 is provided by way of example and may only be one part of an entire process/procedure. The method 500 may further omit parts of the method not germane to the present disclosure, as would be understood by one of ordinary skill in the art. Each block shown in FIG. 5 may further represent one or more steps, processes, methods, or subroutines, as would be understood by one of ordinary skill in the art. For the sake of convenience and ease of explanation, the blocks in FIG. 5 may refer to the components in FIG. 4 and/or descriptions of the other figures described herein; however, the method 500 is not limited in any way to the components, apparatuses, and/or constructions shown in any of the figures described herein. Accordingly, the numerals from FIG. 4 may be presented in parentheses in FIG. 5 and its description below.

In block 510, a single neural net demodulator model may be trained for a fixed modulation order $2^q$ for $q \in \theta = \{2, 4, \ldots, M\}$, which may be denoted by $NNRx_q$, resulting in, for example, the trained neural net demodulator model 410. At block 515, one or more upper/output layers may be removed from the trained neural net demodulator model $NNRx_q$, leaving base layers (such as, for example, base layers 415).

At block 520, a set of one or more upper/output layers, consisting of one for each desired modulation scheme in the target neural net demodulator, are generated. This may be accomplished in a number of ways. In the examples of FIGS. 6A-6B, 7A-7B, and 8A-8B, a set of neural net demodulator models $NNRx_z$ are generated for each of the other modulation schemes $2^z$, i.e. $\forall z \neq q \in \theta = \{2, 4, \ldots, M\}$, besides the trained modulation scheme ($NNRx_q$). Then, in the examples of 6A-6B and 7A-7B, one or more upper/output layers, equivalent in the number of layers to the excluded one or more layers in block 515, are taken from each of the generated neural net demodulator models $NNRx_z$. In some examples, the one or more upper/output layers of block 520 may be created in the target neural net demodulator (450) and/or in the source neural net demodulator model (410). In any event, as explained further below, the number in the set may be at least $2^z$, to cover all other desired modulation schemes ($NNRx_z$) besides the trained modulation scheme ($NNRx_q$).

At block 530, the base layers (415) of the trained neural net demodulator model (410) from block 515 are transferred to the target neural net demodulator (450). In the example of FIG. 4, these transferred base layers become transferred base layers 420.

At block 540, the generated set of one or more upper/output layers from block 520 may be transferred to the target neural net demodulator (450). As mentioned above, the set of one or more upper/output layers in block 520 may be generated in the target neural net demodulator (450), thereby eliminating this block.

At block 550, the generated set of one or more upper/output layers are trained in the target neural net demodulator (450) such that there may be a complete set of desired modulation schemes when combined with the transferred base layers (420). In the example of FIG. 4, this is the set of one or more upper/output layers 431 for a 1st modulation scheme, one or more upper/output layers 432 for a 2nd modulation scheme, one or more upper/output layers 433 for a 3rd modulation scheme, ... et seq.

Accordingly, the target neural net demodulator (450) after block 550 in FIG. 5 may be able to demodulate any of

11

the desired modulation schemes in a similar manner as the neural net demodulator 300 in FIG. 3, but using much less memory/storage, as the target neural net demodulator (450) need only store the transferred base layers (420) and the set of upper/output layers (e.g., 431, 432, 433, ... et seq.) rather than a set of complete neural demodulator models like the set $\mathcal{S}$ = {$NNRx_2$, $NNRx_4$, ... , $NNRx_M$} of neural net demodulator models 310-Rx$_2$, 310-Rx$_4$, ..., 310-Rx$_M$--one for each modulation order/scheme--stored by the neural net demodulator 300 in FIG. 3.

Although the examples shown in FIG. 4 and 5 are on the receiving end of a communications system, examples according to the present disclosure may also be applied to the modulation system on the transmitting end, as would be understood by one of ordinary skill in the art. For example, the neural net modulation system 240B in FIG. 2B and/or the neural net modulation system 240C in FIG. 2C may employ the system and method shown in the examples of FIGS. 4 and 5, suitably modified for modulation schemes/orders instead of demodulation schemes/orders, as would be understood by one of ordinary skill in the art.

Examples of the present disclosure, such as shown in FIGS. 4 and 5, may be applied in a system either with pilot signals or without pilot signals. For example, the neural net demodulation system 290A in FIG. 2A may employ the system and method shown in the examples of FIGS. 4 and 5, respectively, where pilot signals are inserted by the conventional OFDM transmitter 100. In such examples, the system and method of FIGS. 4 and 5, respectively, may be applied only on the receiving end of the system. In some examples, the system and method of FIGS. 4 and 5, respectively, may be applied by maximizing the bit-metric decoding rate, which may be a better metric than minimizing the Binary Cross Entropy (BCE) loss. In some examples, the system and method of FIGS. 4 and 5, respectively, may be applied by only training the trainable layers of $|\theta|$ - 1 neural net demodulator models at the receiving side.

By contrast, the neural net demodulation system 290B in the example of FIG. 2B may also employ the system and method shown in the examples of FIGS. 4 and 5, respectively, but there are no pilot signals as the OFDM neural net transmitter 200B employs a neural net modulation system 240B. In such examples, the system and method of FIGS. 4 and 5, respectively, may be applied on both the transmitting end and the receiving end of the system (E2E). In some examples, the system and method of FIGS. 4 and 5, respectively, may be applied E2E by maximizing the bit-metric decoding rate, minimizing the BCE loss, and/or using E2E learning as explained in, e.g., Aoudia 2022. In some examples, the transmitting side may be trained completely because the modulation order is changed from $q$ to other modulation orders $z \neq q$, i.e., the complete neural network at the modulator on the transmitter and only the trainable layers of $|\theta|$ - 1 neural net modulation schemes/orders at the demodulator on the receiver side.

As mentioned above, FIGS. 6A-6B, 7A-7B, and 8A-8B are block diagrams and flow diagrams illustrating three different approaches to TL as applied to a multi-layer neural net demodulator model in accordance with examples of the present disclosure. More specifically, FIGS. 6A and 6B are a block diagram and a flow diagram, respectively, illustrating a TL-minimum approach, where only the last single layer is excluded from the transferred base layers of the trained source multi-layer neural net demodulator model, and thus a set of last single layers are trained in the target multi-layer neural net demodulator to form different modulation schemes, in accordance with an example of the present disclosure. FIGS. 7A and 7B are a block diagram and a flow diagram, respectively, illustrating a TL-medium approach, where the last few layers are excluded from the transferred base layers of the trained source multi-layer neural net demodulator model, and thus a set of last few layers are trained in the target multi-layer neural net demodulator to form different modulation schemes, in accordance with an example of the present disclosure. FIGS. 8A and 8B are a block diagram and a flow diagram, respectively, illustrating a TL-maximum approach, where only the last layer is excluded from the transferred base layers of the trained source multi-layer neural net demodulator model, but are replaced with added multiple layers that are trained in the target multi-layer neural net demodulator to form different modulation schemes, in accordance with an example of the present disclosure.

The methods 600B, 700B, and 800B shown in FIGS. 6B, 7B, and 8B, respectively, are provided by way of example and may only be one part of an entire process/procedure. The methods 600B, 700B, and 800B may further omit parts of the method(s) not germane to the present disclosure, as would be understood by one of ordinary skill in the art. Each block shown in FIGS. 6B, 7B, and 8B may further represent one or more steps, processes, methods, or subroutines, as would be understood by one of ordinary skill in the art. For the sake of convenience and ease of explanation, the blocks in FIGS. 6B, 7B, and 8B may refer to, e.g., the components in FIGS. 6A, 7A, and 8A, and/or descriptions of the other figures described herein; however, the methods 600B, 700B, and 800B are not limited in any way to the components, apparatuses, and/or constructions shown in any of the figures described herein. Moreover, the actions represented by the blocks in FIGS. 6B, 7B, and 8B may occur in a different order in other examples, some blocks may repeat, some blocks may not be utilized, one, some or all of the blocks may be employed in a reiterative cycle, *etc.*, as would be understood by one of ordinary skill in the art.

In FIGS. 6A and 6B (the TL-minimum approach), a single neural net demodulator model 610A may be trained at block 610B of method 600B for a fixed modulation order $2^q$ for $q \in \theta$ = {2, 4, ... , M}, which may be denoted by $NNRx_q$. At block 620B, neural net demodulator models $NNRx_z$ are generated for all the other modulation schemes $2^z$, *i.e.* $\forall z \neq q \in \theta$ = {2, 4, ... , M}, wherein all of the layers in each of the generated neural net demodulator models $NNRx_z$ are the same as the base layers 615A in single neural net demodulator model 610A, $NNRx_q$, except for the last layer 630A which has z outputs instead of q outputs. At block 625, the trained weights for the layers of the single neural net demodulator model 610A $NNRx_q$ except for the last layer, *i.e.*, the base layers 615A, are transferred to the target neural net demodulator 650A (to become the base layers 620A). At block 630B, the weights of the last layer 630A of each of the generated neural net demodulator models $NNRx_z$ are trained in the target neural net demodulator 650A. Only the last layer 630A is trained in block 630B because each of the other modulation schemes $2^z$ may change only the output dimension of the last layer 630A.

Thus, the total weights which may be stored using the TL-minimum approach are the weights of all the layers of the trained single neural net demodulator model 610A $NNRx_q$ and the weights of the last layer 630A for each of the other modulation schemes $2^z$.

As a working example, it is assumed that the single neural net demodulator model 610A was trained at block 610B for fixed modulation order $2^{q=6}$, which may be denoted by $NNRx_6$ (*i.e.*, the 64-QAM modulation order), and the target neural net demodulator 650A needs the modulation schemes for QPSK and 16-QAM, *i.e.*, neural net demodulator models $NNRx_z$ are to be generated at block 620B for all other modulation schemes $2^z$, where $z \in \{2, 4\}$. However, neural net demodulator model $NNRx_2$ (QPSK) and neural net demodulator model $NNRx_4$ (16-QAM) have the same base layers 620A as the trained neural net demodulator model 610A $NNRx_6$ (64-QAM modulation), and only the last layer 630A of each of the neural net demodulator model $NNRx_2$ (QPSK, *i.e.*, outputting 2 LLR values) and the neural net demodulator model $NNRx_4$ (16-QAM, *i.e.*, outputting 4 LLR values) are different. Accordingly, the trained weights for the base layers 615A of the trained neural net demodulator model 610A $NNRx_6$ are transferred to the target neural net demodulator 650A (to become the base layers 620A) and the weights of the last layer 630A of each of the neural net demodulator model $NNRx_2$ (QPSK) and the neural net demodulator model $NNRx_4$ (16-QAM) are trained and stored at the target neural net demodulator 650A.

In this working example, the total weights which may be stored using the TL-minimum approach are the weights of all the layers of the trained single neural net demodulator model 610A $NNRx_6$ (64-QAM) and the weights of the last layer 630A of each of the neural net demodulator model $NNRx_2$ (QPSK) and the neural net demodulator model $NNRx_4$ (16-QAM).

This approach is called TL-minimum because it leads to minimal storage requirements in the target neural net demodulator, *i.e.*, besides the weights of the trained neural net demodulator, only the last layer of each of the other modulation orders need to be stored. Based on, *inter alia,* experimentation, it is believed that the TL-minimum approach may be best used when the target neural net demodulator needs lower modulation orders than the trained neural net demodulator.

In FIGS. 7A and 7B (the TL-medium approach), a single neural net demodulator model 710A may be trained at block 710B of method 700B for a fixed modulation order $2^q$ for $q \in \theta = \{2, 4, \dots, M\}$, which may be denoted by $NNRx_q$. At block 720B, neural net demodulator models $NNRx_z$ are generated for all the other modulation schemes $2^z$, *i.e.* $\forall z \neq q \in \theta = \{2, 4, \dots, M\}$, wherein each of the generated neural net demodulator models $NNRx_z$ has z outputs instead of q outputs. At block 725B, the trained weights for the bottom/base layers of the single neural net demodulator model 710A $NNRx_q$ except for the last few layers 717A, *i.e.*, the base layers 713A, are transferred to the target neural net demodulator 750A (to become the base layers 723A). At block 730B, the weights of the last few layers 737A of each of the generated neural net demodulator models $NNRx_z$ are trained in the target neural net demodulator 750A.

The last few layers 737A are trained in the TL-medium approach because it provides more flexibility in training the other neural net demodulator models $NNRx_z$; however, this flexibility comes at a cost in terms of memory/storage usage. Specifically, the total weights which may be stored using the TL-medium approach are the weights of all the layers of the trained single neural net demodulator model 710A $NNRx_q$ and the trained weights of the last few layers 737A for each of the other modulation schemes $2^z$.

Using the same working example from above, it is assumed the single neural net demodulator model 710A $NNRx_6$ was trained at block 710B for fixed modulation order $2^{q=6}$, *i.e.*, the 64-QAM modulation order, and the target neural net demodulator 750A needs the modulation schemes for QPSK and 16-QAM, i.e., neural net demodulator model $NNRx_2$ (QPSK) and neural net demodulator model $NNRx_4$ (16-QAM). Using the TL-medium approach, neural net demodulator model $NNRx_2$ (QPSK) and neural net demodulator model $NNRx_4$ (16-QAM) may employ the same base/bottom layers 723A as the base/bottom layers 713A of the trained neural net demodulator model 710A $NNRx_6$ (64-QAM modulation), but a multiplicity of upper/output layers 737A are trained and stored for each of the neural net demodulator model $NNRx_2$ (QPSK) and the neural net demodulator model $NNRx_4$ (16-QAM), utilizing much more memory/storage than the TL-minimum approach. Specifically, the total weights which may be stored In this working example using the TL-medium approach are the weights of all the layers of the trained single neural net demodulator model 710A $NNRx_6$ (64-QAM) and the trained weights of the last several layers 730A of each of the neural net demodulator model $NNRx_2$ (QPSK) and the neural net demodulator model $NNRx_4$ (16-QAM).

This approach is called TL-medium because it leads to more storage requirements in the target neural net demodulator than the TL-minimum approach. Based on, *inter alia,* experimentation, it is believed that the TL-medium approach may be best used when the target neural net demodulator may be employing many types of modulation schemes that may be either of a higher or lower order than the modulation scheme of the trained neural net demodulator.

In FIGS. 8A and 8B (the TL-maximum approach), a single neural net demodulator model 810A may be trained at block 810B of method 800B for a fixed modulation order $2^q$ for $q \in \theta = \{2, 4, ... , M\}$, which may be denoted by $NNRx_q$. At block 820B, neural net demodulator models $NNRx_z$ are generated for all the other modulation schemes $2^z$, i.e. $\forall z \neq q \in \theta = \{2, 4, ... , M\}$, wherein each of the generated neural net demodulator models $NNRx_z$ has z outputs instead of q outputs. At block 822B, a single last layer may be removed from the generated neural net demodulator models $NNRx_z$, similar to removing a single top/last layer 816A from the trained neural net demodulator model 810A, leaving base layers 815A, which will be transferred to the target neural net demodulator 850A in block 826B below. At block 824B, multiple new layers 890A are added to each of the generated neural net demodulator models $NNRx_z$ (replacing the top layer removed in block 822B), such that the last layer has z outputs. In other words, a set of multiple new layers are created, one for each of the other modulation schemes $2^z$, i.e. $\forall z \neq q \in \theta = \{2, 4, ... , M\}$, and added on top of the base layers of the set of generated neural net demodulator models $NNRx_z$.

At block 826B, the trained weights for the base layers 815A of the single neural net demodulator model 810A $NNRx_q$ (excluding the removed top/last layer 816A) are transferred to the target neural net demodulator 850A (to become the base layers 820A). At block 828B, the multiple new layers 890A added to each of the generated neural net demodulator models $NNRx_z$ (replacing the top layer removed in block 822B) are transferred to the target neural net demodulator 850A. At block 830B, the weights of the multiple new layers 890A added to each of the generated neural net demodulator models $NNRx_z$ are trained in the target neural net demodulator 750A. As with all the method drawings herein (and as noted above), the blocks in FIG. 8B may be performed in a different order; for example, although blocks 822B and 824B may occur in the same order, they may be performed at a different time in the method 800B (such as after block 826B).

The TL-maximum approach provides even more flexibility in training for higher modulation schemes and/or in different scenarios than the TL-medium and TL-minimum approaches; however, this flexibility similarly comes at a cost in terms of memory/storage usage. Specifically, the total weights which may be stored using the TL-maximum approach are the weights of all the layers of the trained single neural net demodulator model 810A $NNRx_q$ and the trained weights of the added multiple new layers 890A for each of the other modulation schemes $2^z$.

Using the same working example from above, where it is assumed the single neural net demodulator model 810A $NNRx_6$ was trained at block 810B for the 64-QAM modulation order, and the target neural net demodulator 850A needs the modulation schemes for QPSK and 16-QAM, i.e., neural net demodulator model $NNRx_2$ (QPSK) and neural net demodulator model $NNRx_4$ (16-QAM), neural net demodulator model $NNRx_2$ (QPSK) and neural net demodulator model $NNRx_4$ (16-QAM) may employ the same base/bottom layers 820A transferred as the base/bottom layers 810A of the trained neural net demodulator model 810A $NNRx_6$ (64-QAM modulation) using the TL-maximum approach, but the added multiple added layers 890A are trained and stored for each of the neural net demodulator model $NNRx_2$ (QPSK) and the neural net demodulator model $NNRx_4$ (16-QAM), utilizing much more memory/storage than either the TL-minimum or the TL-medium approach. Specifically, the total weights which may be stored using the TL-maximum approach in the working example are the weights of all the layers of the trained single neural net demodulator model 810A $NNRx_6$ (64-QAM) and the trained weights of the added multiple added new layers 890A of each of the neural net demodulator model $NNRx_2$ (QPSK) and the neural net demodulator model $NNRx_4$ (16-QAM).

As mentioned above, and based on, *inter alia,* experimentation, it is believed that the TL-maximum approach may be best used to provide more flexibility when training the target neural net demodulator for higher modulation schemes (such as, e.g., possible future modulation orders like 2048-QAM) and/or in different scenarios which may have, e.g., unique and/or unforeseen conditions and/or requirements/parameters.

Although the examples shown in FIGS. 6A-6B, 7A-7B, and 8A-8B are on the receiving end of a communications system, examples according to the present disclosure may also be applied to the modulation system on the transmitting end, as would be understood by one of ordinary skill in the art. For example, the neural net modulation system 240B in FIG. 2B and/or the neural net modulation system 240C in FIG. 2C may employ the system and method shown in the examples of FIGS. 6A-6B, 7A-7B, and 8A-8B, suitably modified for modulation schemes/orders instead of demodulation schemes/orders, as would be understood by one of ordinary skill in the art.

Examples of the present disclosure, such as shown in FIGS. 6A-6B, 7A-7B, and 8A-8B, may be applied in a system either with pilot signals or without pilot signals. For example, the neural net demodulation system 290A in FIG. 2A may employ the system and method shown in the examples of FIGS. 6A-6B, 7A-7B, and 8A-8B, where pilot signals are inserted by the conventional OFDM transmitter 100. In such examples, the system and method of FIGS. 6A-6B, 7A-7B, and 8A-8B may be applied only on the receiving end of the system. In some examples, the system and method of FIGS. 6A-6B, 7A-7B, and 8A-8B may be applied by maximizing the bit-metric decoding rate, which may be a better metric than minimizing the Binary Cross Entropy (BCE) loss. In some examples, the system and method of FIGS. 6A-6B, 7A-7B, and 8A-8B may be applied by only training the trainable layers of $|\theta|$ - 1 neural net demodulator models at the receiving side.

By contrast, the neural net demodulation system 290B in the example of FIG. 2B may also employ the system and method shown in the examples of FIGS. 6A-6B, 7A-7B, and 8A-8B, but there are no pilot signals as the OFDM neural net transmitter 200B employs a neural net modulation system 240B. In such examples, the system and method of FIGS.

6A-6B, 7A-7B, and 8A-8B may be applied on both the transmitting end and the receiving end of the system (E2E). In some examples, the system and method of FIGS. 6A-6B, 7A-7B, and 8A-8B may be applied by maximizing the bit-metric decoding rate, minimizing the BCE loss, and/or using E2E learning as explained in, e.g., Aoudia 2022. In some examples, the transmitting side may be trained completely because the modulation order is changed from $q$ to other modulation orders $z \neq q$, i.e., the complete neural network at the modulator on the transmitter and only the trainable layers of $|\theta| - 1$ neural net modulation schemes/orders at the demodulator on the receiver side.

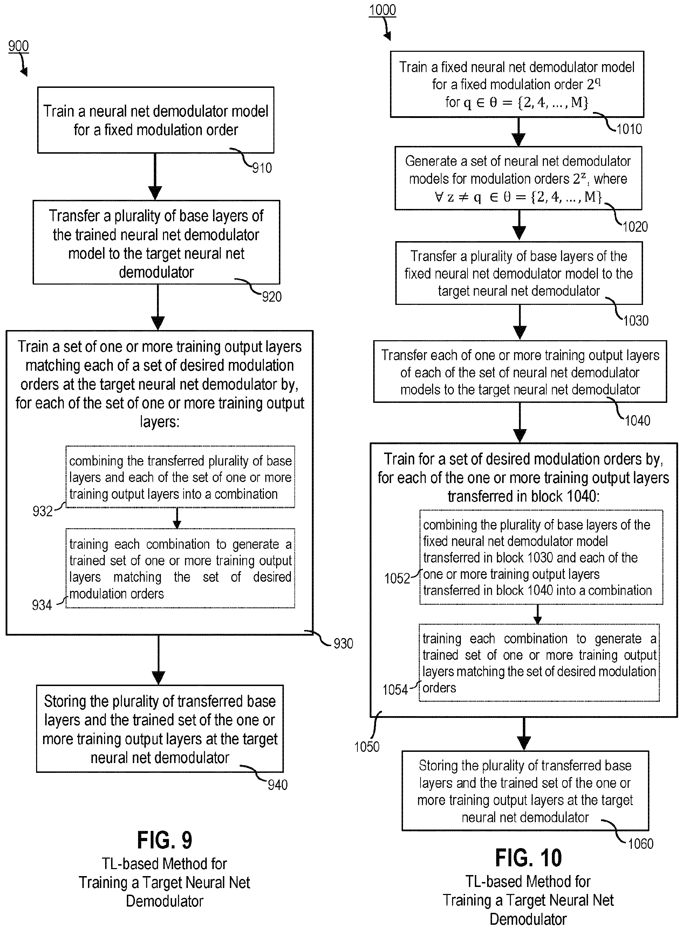

FIG. 9 is a flow diagram illustrating a TL-based method 900 for training a target neural net demodulator, according to examples of the present disclosure. The method 900 shown in FIG. 9 is provided by way of example and may only be one part of an entire process/procedure. The method 900 may further omit parts of the method not germane to the present disclosure, as would be understood by one of ordinary skill in the art. Each block shown in FIG. 9 may further represent one or more steps, processes, methods, or subroutines, as would be understood by one of ordinary skill in the art. For the sake of convenience and ease of explanation, the blocks in FIG. 9 may refer to the components and/or descriptions of the other figures described herein; however, the method 900 is not limited in any way to the components, apparatuses, and/or constructions shown in any of the figures described herein. As mentioned above, although the present disclosure may often refer to neural network receivers/transmitters in the various examples, it should be understood that the present disclosure applies equally to neuromorphic network receivers/ transmitters, as would be understood by one of ordinary skill in the art.

At block 910, a neural net demodulator model may be trained for a fixed modulation order, where the neural net demodulator model may include a plurality of base layers starting at an input and at least one output layer at an output. In the examples of FIGS. 4 and 5, the single multi-layer neural net demodulator model 410 is trained at block 510 and may include the plurality of base layers 415 and at least one output layer. In the examples of FIGS. 6A-6B and 8A-8B, the at least one output layer of the trained neural net demodulator model 610A/810A is only one layer, i.e., a single output layer. In the examples of FIGS. 7A-7B, the at least one output layer of the trained neural net demodulator model 710A is a few layers, i.e., a plurality of output layers.

At block 920, the plurality of base layers of the trained neural net demodulator model may be transferred to the target neural net demodulator. In the examples of FIGS. 4 and 5, the plurality of base layers 415 of the single multi-layer neural net demodulator model 410 is transferred at block 530 into the target neural net demodulator 450. In the examples of FIGS. 6A-6B, 7A-7B, and 8A-8B, the trained weights of the base layers 615A/713A/815A are transferred to the target neural net demodulator 650A/750A/850A at blocks 625B, 725B, and 826B, respectively.

At block 930, a set of one or more training output layers matching each of a set of desired modulation orders may be trained at the target neural net demodulator by, for each of the set of one or more training output layers, performing sub-blocks 932 and 934. In the examples of FIGS. 4 and 5, the generated set of one or more upper/output layers from block 520 is transferred to the target neural net demodulator 450. At sub-block 932 of block 930, the transferred plurality of base layers may be combined with each of the set of one or more training output layers into a combination and then, at sub-block 934 of block 930, each combination of transferred base layers and one or more training layers from sub-block 932 may be trained to generate a trained set of one or more training output layers matching the set of desired modulation orders. In the examples of FIGS. 4 and 5, the transferred base layers 420 are combined with the generated set of one or more upper/output layer(s) from block 520 and then each combination is trained at block 550 such that a trained set of upper/output layer(s) is created (i.e., the set of upper/output layers 431, upper/output layers 432, upper/output layers 433, ... et seq., for each of the desired modulation orders).

At block 940, the plurality of transferred base layers and the trained set of the one or more training output layers may be stored at the target neural net demodulator. In the example of FIG. 4, the transferred base layers 420 and the trained set of upper/output layers 431, upper/output layers 432, upper/output layers 433, ... et seq., for each of the desired modulation orders, is shown stored in the target neural net demodulator 450.

In some examples, the one or more training output layers of the set of one or more training output layers in block 930 may include a single output layer. In the example of FIGS. 6A-6B, the one or more training output layers is a single last layer 630A, i.e., a single output layer.

In some examples, the one or more training output layers of the set of one or more training output layers in block 930 may include a plurality of output layers. In the examples of FIGS. 7A-7B and 8A-8B, the one or more training output layers is the last few layers 737A of the target neural net demodulator 750A and the multiple new layers 890A of the target neural net demodulator 850A, respectively, i.e., a plurality of output layers.

In some examples, the one or more training output layers of the set of one or more training output layers in block 930 may include a plurality of output layers equal in number to the at least one output layer at the output of the trained neural net demodulator model. In the example of FIGS. 6A-6B, the one or more training output layers is the single last layer 630A of target neural net demodulator 650A which is equal in number to the replaced last output layer of the trained neural net demodulator model 610A. In the example of FIGS. 7A-7B, the one or more training output layers are the last few layers 737A of target neural net demodulator 750A which is equal in number to the replaced last few layers 717A of the trained neural net demodulator model 710A.

In some examples, the set of one or more training output layers in block 930 may be generated, where each of the set of one or more training output layers may match or correspond with each of a set of desired modulation orders/schemes. In the examples of FIGS. 6A-6B and 7A-7B, the set of one or more training output layers in block 930 are generated as the last output layer(s) from a set of neural net demodulator models generated in blocks 620B and 720B, respectively, i.e., the last layer 630A of FIG. 6A and the last few layers 737A of FIG. 7A. More specifically, in the examples of FIGS. 6A-6B and 7A-7B, the trained neural net demodulator model 610A and the trained neural net demodulator model 710A, respectively, had a fixed modulation order $2^q$ for $q \in \theta = \{2, 4, \ldots, M\}$, and the set of neural net demodulator models were generated in blocks 620B and 720B, respectively, for all the other modulation schemes $2^z$, i.e. $\forall z \neq q \in \theta = \{2, 4, \ldots, M\}$.

FIG. 10 is a flow diagram illustrating a TL-based method 1000 for training a target neural net demodulator, according to examples of the present disclosure. The method 1000 shown in FIG. 10 is provided by way of example and may only be one part of an entire process/procedure. The method 1000 may further omit parts of the method not germane to the present disclosure, as would be understood by one of ordinary skill in the art. Each block shown in FIG. 10 may further represent one or more steps, processes, methods, or subroutines, as would be understood by one of ordinary skill in the art. For the sake of convenience and ease of explanation, the blocks in FIG. 10 may refer to the components and/or descriptions of the other figures described herein; however, the method 1000 is not limited in any way to the components, apparatuses, and/or constructions shown in any of the figures described herein. As mentioned above, although the present disclosure may often refer to neural network receivers/transmitters in the various examples, it should be understood that the present disclosure applies equally to neuromorphic network receivers/ transmitters, as would be understood by one of ordinary skill in the art.

At block 1010, a neural net demodulator model may be trained for a fixed modulation order $2^q$ for $q \in \theta = \{2, 4, \ldots, M\}$, where the neural net demodulator model may include a plurality of base layers starting at an input and at least one output layer at an output. In the examples of FIGS. 6A-6B, 7A-7B, and 8A-8B, the fixed neural net demodulator model 610A/710A/810A is trained for a fixed modulation order $2^q$ for $q \in \theta = \{2, 4, \ldots, M\}$ in blocks 610B/710B/810B. In the examples of FIGS. 4 and 5, the single multi-layer neural net demodulator model 410 is trained at block 510 and may include the plurality of base layers 415 and at least one output layer. In the examples of FIGS. 6A-6B, 7A-7B, and 8A-8B, the fixed neural net demodulator model 610A/710A/810A includes a plurality of base layers 615A/713A/815A and at least one output layer (i.e., the last few layers 717A of FIG. 7A and the top/last layer 816A in FIG. 8A). The at least one output layer of the trained neural net demodulator model 610A/810A in FIGS. 6A-6B/8A-8B is only one layer, i.e., a single output layer. The at least one output layer of the trained neural net demodulator model 710A in FIGS. 7A-7B is a few layers, i.e., a plurality of output layers.

At block 1020, a set of neural net demodulator models for modulation orders $2^z$, where $\forall z \neq q \in \theta = \{2, 4, \ldots, M\}$, may be generated, where each of the set of neural net demodulator models comprises a plurality of base layers starting at an input and one or more training output layers at an output. In the examples of FIGS. 6A-6B, 7A-7B, and 8A-8B, a set of neural net demodulator models were generated in blocks 620B/720B/820B for all the other modulation schemes $2^z$, i.e. $\forall z \neq q \in \theta = \{2, 4, \ldots, M\}$. In some examples, each of the set of neural net demodulator models generated in block 1020 may match or correspond with each of a set of desired modulation orders/schemes.

At block 1030, the plurality of base layers of the trained neural net demodulator model (or fixed neural net demodulator model) may be transferred to the target neural net demodulator. In the examples of FIGS. 4 and 5, the plurality of base layers 415 of the single multi-layer neural net demodulator model 410 (or fixed neural net demodulator model) is transferred at block 530 into the target neural net demodulator 450. In the examples of FIGS. 6A-6B, 7A-7B, and 8A-8B, the trained weights of the base layers 615A/713A/815A of the fixed neural net demodulator model are transferred to the target neural net demodulator 650A/750A/850A at blocks 625B, 725B, and 826B, respectively.

At block 1040, each of one or more training output layers of each of the generated set of neural net demodulator models from block 1020 may be transferred to the target neural net demodulator. In some examples, each of the one or more training output layers in block 1040 may match or correspond with each of a set of desired modulation orders/schemes. In the examples of FIGS. 6A-6B and 7A-7B, each of the one or more training output layers in block 1040 are the last output layer(s) from the set of neural net demodulator models generated in blocks 620B and 720B, respectively, i.e., the last layer 630A of FIG. 6A and the last few layers 737A of FIG. 7A. In the example of FIGS. 8A-8B, each of the one or more training output layers in block 1040 are the added multiple new layers 890A in block 824B.

At block 1050, the target neural net demodulator may train for a set of desired modulation orders/schemes by, for each of the set of one or more training output layers transferred in block 1040, performing sub-blocks 1052 and 1054. At sub-block 1052 of block 1050, the plurality of base layers transferred in block 1030 may be combined with each of the set of one or more training output layers transferred in block 1040 into a combination, and then, at sub-block 1054 of block 1050, each combination from sub-block 1052 of transferred base layers and one or more training layers may be trained to generate a trained set of one or more training output layers matching the set of desired modulation orders. In the examples of FIGS. 4 and 5, the transferred base layers 420 are combined with the generated set of one or more upper/output layer(s) from block 520 and then each combination is trained at block 550 such that a trained set of upper/output layer(s) is created (i.e., the set of upper/output layers 431, upper/output layers 432, upper/output layers 433, ... et seq., for each of the desired modulation orders).

In the examples of FIGS. 6A-6B, 7A-7B, and 8A-8B, the weights of the last layer 630A, the last few layers 737A, and the added multiple new layers 890A, respectively, are trained at blocks 630B, 730B, and 830B, respectively. More specifically, in the examples of FIGS. 6A-6B, 7A-7B, and 8A-8B, the weights of the base layers 615A, 713A, and 815A, respectively, are combined with the last layer 630A, the last few layers 737A, and the added multiple new layers 890A, respectively, to generate trained versions of the last layer 630A, the last few layers 737A, and the added multiple new layers 890A, respectively.

At block 1060, the plurality of transferred base layers and the trained set of the one or more training output layers may be stored at the target neural net demodulator. In the example of FIG. 4, the transferred base layers 420 and the trained set of upper/output layers 431, upper/output layers 432, upper/output layers 433, ... et seq., for each of the desired modulation orders, is shown stored in the target neural net demodulator 450. In the examples of FIGS. 6A-6B, 7A-7B, and 8A-8B, the weights of the transferred base layers 620A, 723A, and 820A, respectively, and the trained weights of the last layer 630A, the last few layers 737A, and the added multiple new layers 890A, respectively, are stored in the target neural net demodulator 650A, 750A, and 850A, respectively.

In some examples, the one or more training output layers transferred in block 1040 from each of the set of neural net demodulator models generated in block 1020 may include a single output layer. In the example of FIGS. 6A-6B, the one or more training output layers is a single last layer 630A, i.e., a single output layer. In some examples, the one or more training output layers transferred in block 1040 from each of the set of neural net demodulator models generated in block 1020 may include a plurality of output layers. In the examples of FIGS. 7A-7B and 8A-8B, the one or more training output layers is the last few layers 737A of the target neural net demodulator 750A and the multiple new layers 890A of the target neural net demodulator 850A, respectively, i.e., a plurality of output layers.

In some examples, the one or more training output layers transferred in block 1040 from each of the set of neural net demodulator models generated in block 1020 may include a plurality of output layers equal in number to the at least one output layer at the output of the trained neural net demodulator model. In the example of FIGS. 6A-6B, the one or more training output layers is the single last layer 630A of target neural net demodulator 650A which is equal in number to the replaced last output layer of the trained neural net demodulator model 610A. In the example of FIGS. 7A-7B, the one or more training output layers are the last few layers 737A of target neural net demodulator 750A which is equal in number to the replaced last few layers 717A of the trained neural net demodulator model 710A.

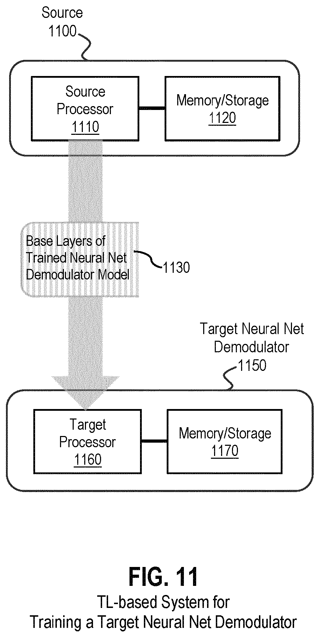

FIG. 11 is a block diagram illustrating a TL-based system for training a target neural net demodulator, according to examples of the present disclosure. The target neural net demodulator in FIG. 11 may be employed to receive and demodulate signals at the network side (e.g., the base station) and/or the user side (i.e., the UE). FIG. 11 is provided to illustrate an example of a TL-based system for training a target neural net demodulator according to the present disclosure, and may omit aspects, features, and/or components not germane to this example of the present disclosure, as would be understood by one of ordinary skill in the art. As mentioned above, although the present disclosure may often refer to neural network receivers/transmitters in the various examples, it should be understood that the present disclosure applies equally to neuromorphic network receivers/ transmitters, as would be understood by one of ordinary skill in the art.

In FIG. 11, a source 1100 may include a source processor 1110 and a memory/storage 1120 which may store data as well as instructions executable by the source processor 1110. A target neural net demodulator 1150 may include a target processor 1160 and a memory/storage 1170 which may store data as well as instructions executable by the target processor 1160. As mentioned above, the target neural net demodulator 1150 may be employed at the network side (e.g., the base station) and/or the user side (i.e., the UE). The target neural net demodulator 1150 may be included in the neural net demodulation system 290A/290B/290C of FIGS. 2A-2C.

In some examples, the source processor 1110 may train a neural net demodulator model for a fixed modulation order, where the trained neural net demodulator model may include multiple base layers starting at an input and at least one output layer at an output. As shown in FIG. 11, the source processor 1110 in some examples may transfer the multiple base layers 1130 of the trained neural net demodulator model to the target neural net demodulator 1150.

As shown in FIG. 11, the multiple base layers 1130 of the trained neural net demodulator model may be received by the target processor 1160 in the target neural net demodulator 1150. In some examples, the target processor 1160 may train a set of one or more training output layers matching each of a set of desired modulation orders by combining the received multiple base layers 1130 and each of the set of one or more training output layers into a combination and then training each combination to generate a trained set of the one or more training output layers, where each of the trained set matches one of the set of desired modulation orders.

In some examples, the target processor 1160 in the target neural net demodulator 1150 may store the received multiple base layers 1130 and the trained set of the one or more training output layers in the memory/storage 1170.

In some examples, the fixed modulation order of the trained neural net demodulator model may include a fixed modulation order $2^q$ for $q \in \theta = \{2, 4, ..., M\}$. In the examples of FIGS. 6A-6B, 7A-7B, and 8A-8B, the neural net demodulator model 610A/710A/810A is trained for a fixed modulation order $2^q$ for $q \in \theta = \{2, 4, ..., M\}$ in blocks 610B/710B/810B.

In some examples, the target processor 1160 in the target neural net demodulator 1150 may receive the set of one or more training output layers matching each of the set of desired modulation orders, where the one or more training output layers include one or more output layers from each of a set of neural net demodulator models generated for modulation orders $2^z$, where $\forall z \neq q \in \theta = \{2, 4, ..., M\}$. In the examples of FIGS. 6A-6B and 7A-7B, the one or more training output layers include one or more output layers from each of a set of neural net demodulator models generated in blocks 620B and 720B, respectively, for all the other modulation schemes $2^z$, i.e. $\forall z \neq q \in \theta = \{2, 4, ..., M\}$.

In some examples, the at least one output layer of the neural net demodulator model trained by the source processor 1110 may be a single layer and the one or more training output layers trained by the target processor 1160 may also be a single output layer. The TL-minimum approach is such an example. In the example of the TL-minimum approach in FIGS. 6A-6B, a single layer is removed from the trained neural net demodulator model 610A (where the remaining base layers 615A of the trained neural net demodulator model 610A are transferred into the target neural net demodulator 650A in block 625B) and the last layer 630A of the target neural net demodulator 650A trained in block 630B is also a single layer.

In some examples, the at least one output layer of the neural net demodulator model trained by the source processor 1110 may include multiple output layers and the one or more training output layers trained by the target processor 1160 may be equal in number to the multiple output layers comprising the at least one output layer of the trained neural net demodulator model. The TL-medium approach is such an example. In the example of the TL-medium approach in FIGS. 7A-7B, the last few layers 717A removed from the trained neural net demodulator model 710A (where the remaining base layers 723A of the trained neural net demodulator model 710A are transferred into the target neural net demodulator 750A in block 725B) and the last few layers 737A of the target neural net demodulator 750A trained in block 730B are the same number of layers.

In some examples, the at least one output layer of the neural net demodulator model trained by the source processor may be a single layer and the one or more training output layers trained by the source processor of each of the set of one or more training output layers comprises a plurality of output layers. The TL-maximum approach is such an example. In the example of the TL-maximum approach in FIGS. 8A-8B, the top/last layer 816A removed from the trained neural net demodulator model 810A is a single layer (where the remaining base layers 815A of the trained neural net demodulator model 810A are transferred into the target neural net demodulator 850A in block 826B) and the multiple new layers 890A trained by the target neural net demodulator 850A in block 830B are a plurality of layers.

In some examples, the source processor 1110 and/or the target processor 1160 may further include one or more processors. In some examples, the source processor 1110 and/or the target processor 1160 may be, for example, a System-on-Chip (SoC), an application specific integrated circuit (ASIC), a field programmable gate array (FPGA), and/or other device/system on which may be stored the executable instructions, and, as such, the source processor 1110 and/or the target processor 1160 may not have a separate memory/storage 1120 and/or memory/storage 1170, but rather have any such memory/storage integrated into its own design. In some examples, the source processor 1110 and/or the target processor 1160 may include, for example, a central processing unit (CPU), a general purpose single- and/or multi-chip processor, a single- and/or multi-core processor, a digital signal processor (DSP), one or more other programmable logic devices, and/or any combination thereof suitable to perform the functions described herein, as would be understood by one of ordinary skill in the art.

The memory/storage 1120 and/or the memory/storage 1170 may include a non-transitory computer-readable storage medium/media storing instructions executable by the source processor 1110 and/or the target processor 1160, as well as storing other data as described in reference to examples of the present disclosure. The non-transitory computer-readable storage medium/media included in and/or with the source processor 1110 and/or the target processor 1160 may be any non-transitory computer-readable memory, such as a hard disk drive, a removable memory, or a solid-state drive (e.g., flash memory, Random Access Memory (RAM), Dynamic RAM (DRAM), Electrically Erasable Programmable Read-Only Memory (EEPROM), etc.), or the like, as would be understood by one of ordinary skill in the art.

In examples according to the present disclosure, any of the methods referred to herein (such as, e.g., the methods 500, 600B, 700B, 800B, 900, and/or 1000) may be implemented by at least one of any type of application, program, library, script, task, service, process, or any type or form of executable instructions executed on hardware such as circuitry that may include digital and/or analog elements (e.g., one or more transistors, logic gates, registers, memory devices, resistive elements, conductive elements, capacitive elements, and/or the like, as would be understood by one of ordinary skill in the art). In some examples, the hardware and data processing components used to implement the various processes, operations, logic, and circuitry described in connection with the examples described herein may be implemented with a general purpose single- and/or multi-chip processor, a single- and/or multi-core processor, a digital signal processor (DSP), an application specific integrated circuit (ASIC), a field programmable gate array (FPGA), or other programmable logic device, discrete gate or transistor logic, discrete hardware components, and/or any combination thereof suitable to perform the functions described herein. A general purpose processor may be any conventional processor, microprocessor, controller, microcontroller, and/or state machine.

In examples according to the present disclosure, any of the methods referred to herein (such as, e.g., the methods 500, 600B, 700B, 800B, 900, and/or 1000) may be executed as instructions stored in a non-transitory computer-readable memory and/or storage medium/media (such as, e.g., the memory/storage 1120 and/or the memory/storage 1170 in FIG. 11). In such examples, the non-transitory computer-readable memory and/or storage medium/media may include one or more components (e.g., random access memory (RAM), read-only memory (ROM), flash or solid state memory, hard disk storage, etc.) for storing data and/or computer-executable instructions for completing and/or facilitating the processing and storage functions described herein. In some examples, the non-transitory computer-readable memory and/or storage medium/media may be non-volatile memory, and may include database components, object code components, script components, or any other type of information structure suitable for implementing the various activities and storage functions described herein.

While examples described herein are directed to configurations as shown, it should be appreciated that any of the components described or mentioned herein may be altered, changed, replaced, or modified, in size, shape, and numbers, or material, depending on application or use case, and adjusted for desired resolution or optimal measurement results. Moreover, single components may be provided as multiple components, and vice versa, to perform the functions and features described herein. It should be appreciated that the components of the system described herein may operate in partial or full capacity, or it may be removed entirely. It should also be appreciated that analytics and processing techniques described herein with respect to the optical measurements, for example, may also be performed partially or in full by other various components of the overall system.

It should be appreciated that data stores may also be provided to the apparatuses, systems, and methods described herein, and may include volatile and/or nonvolatile data storage that may store data and software or firmware including machine-readable instructions. The software or firmware may include subroutines or applications that perform the functions of the measurement system and/or run one or more application that utilize data from the measurement or other communicatively coupled system.

The various components, circuits, elements, components, and interfaces may be any number of mechanical, electrical, hardware, network, or software components, circuits, elements, and interfaces that serves to facilitate communication, exchange, and analysis data between any number of or combination of equipment, protocol layers, or applications. For example, the components described herein may each include a network or communication interface to communicate with other servers, devices, components or network elements via a network or other communication protocol.

What has been described and illustrated herein are examples of the disclosure along with some variations. The terms, descriptions, and figures used herein are set forth by way of illustration only and are not meant as limitations.

**Claims**

1.  A transfer learning, TL, -based method for training a target neural net demodulator, comprising:

    training a neural net demodulator model for a fixed modulation order, wherein the neural net demodulator model comprises a plurality of base layers starting at an input and at least one output layer at an output;
    transferring the plurality of base layers to the target neural net demodulator;
    training a set of one or more training output layers matching each of a set of desired modulation orders at the target neural net demodulator by, for each of the set of one or more training output layers:

       combining the transferred plurality of base layers and each of the set of one or more training output layers into a combination; and
       training each combination to generate a trained set of the one or more training output layers, wherein each of the trained set matches one of the set of desired modulation orders; and

    storing the plurality of transferred base layers and the trained set of the one or more training output layers at the target neural net demodulator.

2.  The TL-based method of claim 1, wherein the at least one output layer at the output of the trained neural net demodulator model comprises a single output layer.

3.  The TL-based method of claim 2, wherein:

    the one or more training output layers of each of the set of one or more training output layers comprises a single output layer; or
    the one or more training output layers of each of the set of one or more training output layers comprises a plurality of output layers.

4. The TL-based method of any preceding claim, wherein the at least one output layer at the output of the trained neural net demodulator model comprises a plurality of output layers.

5. The TL-based method of claim 4, wherein the one or more training output layers of each of the set of one or more training output layers comprises a plurality of output layers equal in number to the plurality of output layers comprising the at least one output layer at the output of the trained neural net demodulator model.

6. The TL-based method of any preceding claim, further comprising:
generating the set of one or more training output layers matching each of the set of desired modulation orders.

7. The TL-based method of claim 6, wherein the fixed modulation order comprises a fixed modulation order $2^q$ for $q \in \theta = \{2, 4, ... , M\}$; and
wherein generating the set of one or more training output layers matching each of the set of desired modulation orders comprises:

generating a set of neural net demodulator models for modulation orders $2^z$, where $\forall\, z \neq q \in \theta = \{2, 4, ... , M\}$; and
removing the one or more training output layers from each of the generated set of the neural net demodulator models.

8. A transfer learning, TL, -based method for training a target neural net demodulator, comprising:

training a fixed neural net demodulator model for a fixed modulation order $2^q$ for $q \in \theta = \{2, 4, ... , M\}$, wherein the fixed neural net demodulator model comprises a plurality of base layers starting at an input and at least one output layer at an output;
generating a set of neural net demodulator models for modulation orders $2^z$, where $\forall\, z \neq q \in \theta = \{2, 4, ... , M\}$, wherein each of the set of neural net demodulator models comprises a plurality of base layers starting at an input and one or more training output layers at an output;
transferring the plurality of base layers of the fixed neural net demodulator model to the target neural net demodulator;
transferring each of the one or more training output layers of each of the set of neural net demodulator models to the target neural net demodulator;
training, by the target neural net demodulator, for a set of desired modulation orders by, for each of the set of one or more training output layers:

combining the transferred plurality of base layers of the fixed neural net demodulator model and each of the transferred one or more training output layers into a combination; and
training each combination to generate a trained set of the one or more training output layers, wherein each of the trained set matches one of the set of desired modulation orders; and

storing the plurality of transferred base layers and the trained set of the one or more training output layers at the target neural net demodulator.

9. The TL-based method of claim 8, wherein the at least one output layer at the output of the fixed neural net demodulator model comprises a single output layer.

10. The TL-based method of claim 9, wherein:

the transferred one or more training output layers of each of the generated set of neural net demodulator models comprises a single output layer, or
the one or more training output layers of each of the generated set of neural net demodulator models comprises a plurality of output layers.

11. The TL-based method of any of claims 8 to 10, wherein the at least one output layer at the output of the fixed neural net demodulator model comprises a plurality of output layers.

12. The TL-based method of claim 11, wherein the one or more training output layers of each of the generated set of neural net demodulator models comprises a plurality of output layers equal in number to the plurality of output layers comprising the at least one output layer at the output of the fixed neural net demodulator model.

13. A transfer learning, TL, -based system for training a target neural net demodulator, comprising:

at least one source processor with a non-transitory computer-readable memory storing instructions executable by the at least one source processor to:

train a neural net demodulator model for a fixed modulation order, wherein the trained neural net demodulator model comprises a plurality of base layers starting at an input and at least one output layer at an output; and transfer the plurality of base layers to the target neural net demodulator; and

at least one target processor in the target neural net demodulator with a non-transitory computer-readable memory storing instructions executable by the at least one target processor to:

train a set of one or more training output layers matching each of a set of desired modulation orders by receiving the plurality of base layers transferred from the at least one source processor, and, for each of the set of one or more training output layers:

combining the received plurality of base layers and each of the set of one or more training output layers into a combination; and
training each combination to generate a trained set of the one or more training output layers, wherein each of the trained set matches one of the set of desired modulation orders; and

store the plurality of transferred base layers and the trained set of the one or more training output layers at the target neural net demodulator.

14. The TL-based system of claim 13, wherein the fixed modulation order of the trained neural net demodulator model comprises a fixed modulation order $2^q$ for $q \in \theta = \{2,4, ..., M\}$,
and optionally,
wherein the non-transitory computer-readable memory in the target neural net demodulator stores instructions executable by the at least one target processor to further:

receive the set of one or more training output layers matching each of the set of desired modulation orders;
wherein the one or more training output layers comprise one or more output layers from each of a set of generated neural net demodulator models, wherein the set of generated neural net demodulator models is for modulation orders $2^z$, where $\forall z \neq q \in \theta = \{2,4, ... , M\}$.

15. The TL-based system of claim 13 or claim 14, wherein:

the at least one output layer of the trained neural net demodulator model comprises a single layer; and
wherein the one or more training output layers of each of the set of one or more training output layers comprises a single output layer,
or
the at least one output layer of the trained neural net demodulator model comprises a plurality of output layers; and
wherein the one or more training output layers of each of the set of one or more training output layers comprises a plurality of output layers equal in number to the plurality of output layers comprising the at least one output layer of the trained neural net demodulator model,
or
the at least one output layer of the trained neural net demodulator model comprises a single layer; and
wherein the one or more training output layers of each of the set of one or more training output layers comprises a plurality of output layers.

FIG. 1

OFDM
Transmitter
100

| IFFT 130 | Pilot Insertion 125 | System Modulation 120 | Channel Encoding 110 | Input Bits |

OFDM
Neural Net Receiver
250A

| FFT 253A | Neural Net Demodulation 290A | Channel Decoding 280A | Decoded Bits |

**FIG. 2A**

Conventional Transmitter → Neural Net Receiver

OFDM
Neural Net Transmitter
200B

| IFFT 230B | Neural Net Modulation 240B | Channel Encoding 210B | Input Bits |

OFDM
Neural Net Receiver
250B

| FFT 253B | Neural Net Demodulation 290B | Channel Decoding 280B | Decoded Bits |

**FIG. 2B**

Neural Net Transmitter → Neural Net Receiver

**OFDM Transmitter 100**

| IFFT 130 | ← | Pilot Insertion 125 | ← | System Modulation 120 | ← | Channel Encoding 110 | ← Input Bits |

**OFDM Neural Net Transmitter 200C**

| IFFT 230C | ← | Neural Net Modulation 240C | ← | Channel Encoding 210C | ← Input Bits |

Base Station (BS)

## FIG. 2C
Dual Conventional/Neural Net Transmitter → Dual Conventional/Neural Net Receiver

**OFDM Neural Net Receiver 250C**

| FFT 253C | → | Neural Net Demodulation 290C | → | Channel Decoding 280C | → Decoded Bits |

**OFDM Receiver 150**

| Pilot Extraction 155 | → | Channel Estimation & Interpolation 157 |

| FFT 153 | → | Equalization 160 | → | System Demodulation 170 | → | Channel Decoding 180 | → Decoded Bits |

User Equipment (UE)

**FIG. 3**
Modulation Order
Model Switching
Neural Net Receiver

500

Source
Domain

**Trained
Multi-Layer Neural Net
Demodulator Model**

410

Transfer

**Base Layers of
Trained Multi-Layer
Neural Net
Demodulator Model**

415

Target Neural Net Demodulator
450

**One or More
Upper Output
Layers for
1st Modulation
Scheme**

431

**One or More
Upper Output
Layers for
2nd Modulation
Scheme**

432

Target
Domain

**Transferred
Base Layers of
Trained Neural Net
Demodulator Model**

420

**One or More
Upper Output
Layers for
3rd Modulation
Scheme**

433

• • •

Transferred
Base Layers

Trained
Upper/Output
Layer(s)

**FIG. 4**

Transfer Learning (TL)-based System for
Training a Neural Net Receiver/Demodulator

---

Train
Single Neural Net Demodulator Model (410)
for a fixed modulation order $2^q$
where $q \in \theta = \{2, 4, ...M\}$

510

Exclude one or more upper/output layers from
Trained Neural Net Demodulator Model (410),
leaving base layers (415)

515

Generate set of one or more upper/output
layer(s) for each of the desired modulation
schemes in the target (450), at least
equivalent in number to
all other modulation schemes $2^z$
where $\forall z \neq q \in \theta = \{2, 4, ...M\}$

520

Transfer base layers (415) of the
Trained Neural Net Demodulator
Model (410) to the Target Neural Net
Demodulator (450)

530

Transfer generated set of one or more
upper/output layer(s) for each of the
desired modulation schemes from block
520 into the Target Neural Net
Demodulator (450)

540

Train the generated set of one or more
upper/output layer(s) such that the
Target Neural Net Demodulator (450)
has a complete set of each of the
desired modulation schemes (431, 432,
433, ..., et seq.)

550

**FIG. 5**

Transfer Learning (TL)-based
Method for Training a Neural Net
Receiver/Demodulator

600B

Trained Neural Net Demodulator Model
of modulation order $2^q$ for $q \in \theta = \{2, 4, ...M\}$
610A

Source

615A

Transfer

Replace &
re-train only
last layer

Target

620A

630A

Target Neural Net Demodulator
650A

## FIG. 6A
TL-minimum Approach
(*modified last output layer only*)
Neural Net Receiver/Demodulator System

Train Single
Neural Net Demodulator Model 610A
for a fixed modulation order $2^q$
for $q \in \theta = \{2, 4, ...M\}$

610B

Generate
Neural Net Demodulator Models for
all other modulation schemes $2^z$
where $\forall \, z \neq q \in \theta = \{2, 4, ...M\}$

620B

Transfer the trained weights
for the base layers 615A of
the Trained Neural Net Demodulator Model 610A to
the Target Neural Net Demodulator 650A,
*i.e.*, the transferred base layers 620A

625B

Train the weights of the last layer 630A of the
Neural Net Demodulator Model *NNRxz*
for all other modulation schemes $2^z$
in the Target Neural Net Demodulator 650A

630B

## FIG. 6B
TL-minimum Approach
(*modified last output layer only*)
Neural Net Receiver/Demodulator Model
Method

700B

Trained Neural Net Demodulator Model
of modulation order $2^q$ for $q \in \theta = \{2, 4, ...M\}$
710A

Source

713A

Transfer

Replace &
re-train last
few layers

717A

Target

723A

737A

Target Neural Net Demodulator
750A

## FIG. 7A

TL-medium Approach
(*modified last few output layers*)
Neural Net Receiver/Demodulator System

Train Single
Neural Net Demodulator Model 710A
for a fixed modulation order $2^q$
for $q \in \theta = \{2, 4, ...M\}$

710B

Generate
Neural Net Demodulator Models for
all other modulation schemes $2^z$
where $\forall z \neq q \in \theta = \{2, 4, ...M\}$

720B

Transfer the trained weights
for the base layers 713A of
the Trained Neural Net Demodulator Model 710A
to the Target Neural Net Demodulator 750A,
*i.e.*, the transferred base layers 723A

725B

Train the weights of the last few layers 737A of
the Neural Net Demodulator Model *NNRxz*
for all other modulation schemes $2^z$
in the Target Neural Net Demodulator 750A

730B

## FIG. 7B

TL-medium Approach
(*modified last few output layers*)
Neural Net Receiver/Demodulator Method

800B

Train Single
Neural Net Demodulator Model 810A
for a fixed modulation order $2^q$
for $q \in \theta = \{2, 4, ...M\}$

810B

Generate
Neural Net Demodulator Models for
all other modulation schemes $2^z$
where $\forall \, z \neq q \in \theta = \{2, 4, ...M\}$

820B

Remove top/last layer from
the Generated Neural Net Demodulator Models
(similar to removing top/last layer 816A from
the Trained Neural Net Demodulator Model 810A,
leaving base layers 815A)

822B

Add multiple new layers 890A to each of the
Generated Neural Net Demodulator Models
(replacing the top/last layer removed in block
822B), wherein the last layer of the multiple new
layers has $z$ outputs

824B

Transfer the trained weights of the base layers 815A
of the Trained Neural Net Demodulator Model 810A
to the Target Neural Net Demodulator 850A,
i.e., the transferred base layers 820A

826B

Transfer the multiple new layers 890A added to the
Generated Neural Net Demodulator Models to the
Target Neural Net Demodulator 850A

828B

Train the weights of the multiple new layers 890A of
the Neural Net Demodulator Model $NNRx_z$
for all other modulation schemes $2^z$
in the Target Neural Net Demodulator 850A

830B

## FIG. 8B

TL-maximum Approach
(*new output layers*)
Neural Net Receiver/Demodulator Method

Trained Neural Net Demodulator Model
of modulation order $2^q$ for $q \in \theta = \{2, 4, ...M\}$
810A

Source

815A

816A

Transfer

Replace last layer with
new layers & re-train
only new layers

Target

820A

890A

Target Neural Net Demodulator
850A

## FIG. 8A

TL-maximum Approach
(*new output layers*)
Neural Net Receiver/Demodulator System

900

Train a neural net demodulator model for a fixed modulation order
910

Transfer a plurality of base layers of the trained neural net demodulator model to the target neural net demodulator
920

Train a set of one or more training output layers matching each of a set of desired modulation orders at the target neural net demodulator by, for each of the set of one or more training output layers:

> combining the transferred plurality of base layers and each of the set of one or more training output layers into a combination
> 932

> training each combination to generate a trained set of one or more training output layers matching the set of desired modulation orders
> 934

930

Storing the plurality of transferred base layers and the trained set of the one or more training output layers at the target neural net demodulator
940

**FIG. 9**
TL-based Method for
Training a Target Neural Net
Demodulator

1000

Train a fixed neural net demodulator model for a fixed modulation order $2^q$ for $q \in \theta = \{2, 4, ..., M\}$
1010

Generate a set of neural net demodulator models for modulation orders $2^z$, where $\forall z \neq q \in \theta = \{2, 4, ..., M\}$
1020

Transfer a plurality of base layers of the fixed neural net demodulator model to the target neural net demodulator
1030

Transfer each of one or more training output layers of each of the set of neural net demodulator models to the target neural net demodulator
1040

Train for a set of desired modulation orders by, for each of the one or more training output layers transferred in block 1040:

> combining the plurality of base layers of the fixed neural net demodulator model transferred in block 1030 and each of the one or more training output layers transferred in block 1040 into a combination
> 1052

> training each combination to generate a trained set of one or more training output layers matching the set of desired modulation orders
> 1054

1050

Storing the plurality of transferred base layers and the trained set of the one or more training output layers at the target neural net demodulator
1060

**FIG. 10**
TL-based Method for
Training a Target Neural Net
Demodulator

Source
1100

Source
Processor
1110

Memory/Storage
1120

Base Layers of
Trained Neural Net
Demodulator Model
1130

Target Neural Net
Demodulator
1150

Target
Processor
1160

Memory/Storage
1170

# FIG. 11

TL-based System for
Training a Target Neural Net Demodulator

Europäisches
Patentamt

European
Patent Office

Office européen
des brevets

# EUROPEAN SEARCH REPORT

**Application Number**

EP 25 19 8500

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | UYOATA E UYOATA ET AL: "On Transfer Learning for a Fully Convolutional Deep Neural SIMO Receiver", ARXIV.ORG, CORNELL UNIVERSITY LIBRARY, 201 OLIN LIBRARY CORNELL UNIVERSITY ITHACA, NY 14853, 29 August 2024 (2024-08-29), XP091862238, * abstract * * Algorithms 1 and 2; figures 2, 3 * * section IV-A; page 5 * * section III; page 3 * | 1-15 | INV. G06N3/045 G06N3/063 G06N3/096 G06N3/0464 |
| A | WEI CUI ET AL: "Transfer Learning with Reconstruction Loss", ARXIV.ORG, CORNELL UNIVERSITY LIBRARY, 201 OLIN LIBRARY CORNELL UNIVERSITY ITHACA, NY 14853, 12 April 2024 (2024-04-12), XP091726260, DOI: 10.1109/TMLCN.2024.3384329 * the whole document * | 1-15 | |
| A | NGUYEN CONG T ET AL: "Transfer Learning for Wireless Networks: A Comprehensive Survey", PROCEEDINGS OF THE IEEE, IEEE. NEW YORK, US, vol. 110, no. 8, 1 August 2022 (2022-08-01), pages 1073-1115, XP011915967, ISSN: 0018-9219, DOI: 10.1109/JPROC.2022.3175942 [retrieved on 2022-06-06] * the whole document * | 1-15 | TECHNICAL FIELDS SEARCHED (IPC) G06N |

The present search report has been drawn up for all claims

| Place of search | Date of completion of the search | Examiner |
|---|---|---|
| The Hague | 11 February 2026 | Tidriri, Khaoula |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................
& : member of the same patent family, corresponding
   document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LIN, X.** An Overview of the 3GPP Study on Artificial Intelligence for 5G New Radio. *arXiv:2308.03515v1*, 10 August 2023
- **HOYDIS, F. A. AOUDIA ; A. VALCARCE ; H. VISWANATHAN**. Toward a 6G AI-Native Air Interface. *IEEE Communications Magazine*, May 2021, vol. 59 (5), 76-81
- **YAO, Y. ; AL-KANANI, H. ; MWANJE, S.** *AI/ML Management for 5G Systems*, 11 September 2023, https://www.3gpp.org/technologies/ai-ml-management
- *3GPP Technical Specification Group (TSG) Radio Access Network (RAN): Study on AI/ML for New Radio (NR) air interface, Release-18 (3GPP TR 38.843 v18.0.0*, December 2023
- draft 3GPP TSG RAN; Evolved Universal Terrestrial Radio Access (E-UTRA) and NR: Study on enhancements for AI/ML for NG-RAN, Release-19. *3GPP TR 38.743 v1.1.0*, August 2024
- draft 3GPP TSG RAN; Study on AI/ML for mobility in NR, Release-19. *3GPP TR 38.744 v0.0.2*, August 2024
- 3GPP TSG RAN; NR; NR and NG-RAN Overall Description; Stage 2, Release-18. *3GPP TS 38.300 v18.2.0*, June 2024
- **X. LIN**. An Overview of 5G Advanced Evolution in 3GPP Release 18. *IEEE Communications Standards Magazine*, September 2022, vol. 6 (3), 77-83
- **M. HONKALA ; D. KORPI ; J. M. J. HUTTUNEN**. DeepRx: Fully Convolutional Deep Learning Receiver. *IEEE Transactions on Wireless Communications*, June 2021, vol. 20 (6), 3925-3940
- **F.A. AOUDIA ; J. HOYDIS**. End-to-End Learning for OFDM: From Neural Receivers to Pilotless Communication. *IEEE Transactions on Wireless Communications*, February 2022, vol. 21 (2), 1049-1063
- **F. A. AOUDIA ; J. HOYDIS**. Trimming the Fat from OFDM: Pilot- and CP-less Communication with End-to-end Learning. *2021 IEEE International Conference on Communications Workshops (ICC Workshops), Montreal, QC, Canada*, 2021, 1-6
- **S. CAMMERER et al.** A Neural Receiver for 5G NR Multi-User MIMO. *2023 IEEE Globecom Workshops (GC Wkshps), Kuala Lumpur, Malaysia*, 2023, 329-334
- **R. MEI ; Z. WANG ; X. CHEN**. CRNN-ResNet: Combined CRNN and ResNet Networks for OFDM Receivers. *IEEE Transactions on Cognitive Communications and Networking*, August 2021, vol. 14 (4)
- **K. HE ; X. ZHANG ; S. REN ; J. SUN**. Deep Residual Learning for Image Recognition. *2016 IEEE Conference on Computer Vision and Pattern Recognition (CVPR), Las Vegas, NV, USA*, 2016, 770-778
- **F. ZHUANG et al.** A Comprehensive Survey on Transfer Learning. *Proceedings of the IEEE*, January 2021, vol. 109 (1), 43-76
- **S. J. PAN ; Q. YANG**. A Survey on Transfer Learning. *IEEE Transactions on Knowledge and Data Engineering*, October 2010, vol. 22 (10), 1345-1359